(19) Europäisches Patentamt / European Patent Office / Office européen des brevets

(11) **EP 4 660 396 A1**

(12) **EUROPEAN PATENT APPLICATION**
published in accordance with Art. 153(4) EPC

(43) Date of publication:
**10.12.2025 Bulletin 2025/50**

(21) Application number: 24755836.4

(22) Date of filing: **05.01.2024**

(51) International Patent Classification (IPC):
*E04H 4/16* (2006.01)     *E04H 4/12* (2006.01)
*G01B 21/00* (2006.01)     *G01P 5/01* (2006.01)
*H01R 13/631* (2006.01)

(52) Cooperative Patent Classification (CPC):
E04H 4/1654; E04H 4/12; E04H 4/16; G01B 21/00;
G01P 5/01; H01R 13/631

(86) International application number:
**PCT/CN2024/070985**

(87) International publication number:
**WO 2024/169460 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 14.02.2023  CN 202310112439
        20.04.2023  CN 202310461751
        11.07.2023  CN 202321815957 U
        22.08.2023  CN 202311063523

(71) Applicant: Shenzhen Aiper Intelligent Co., Ltd.
**Shenzhen, Guangdong 518100 (CN)**

(72) Inventors:
• **WANG, Yang**
  **Shenzhen, Guangdong 518000 (CN)**
• **YU, Xueliang**
  **Shenzhen, Guangdong 518000 (CN)**
• **YE, Liangwen**
  **Shenzhen, Guangdong 518000 (CN)**
• **ZHOU, Jiyong**
  **Shenzhen, Guangdong 518000 (CN)**
• **YANG, Zhiguang**
  **Shenzhen, Guangdong 518000 (CN)**

(74) Representative: **Wenzel Nemetzade Warthmüller
Patentanwälte Part mbB
Maximilianstraße 2
80539 München (DE)**

(54) **SWIMMING POOL ROBOT**

(57)    The present invention relates to a swimming pool robot, which comprises: a housing, a filter module, a water pump module, and an out-of-water detection module, the out-of-water detection module comprising a buoyancy unit and a sensing unit; the swimming pool robot is provided with a water drainage module, and the housing has formed therein a first cavity communicated with a water inlet, the first cavity being located at the front end of the swimming pool robot in the advancing direction, and the first cavity being communicated with/closed relative to the outside via the water drainage module; the swimming pool robot is provided with a control module, a cleaning module, and a drive module, the control module being respectively in signal connection with the drive module and the out-of-water detection module; the drive module simultaneously controls the movement of the swimming pool robot and cleaning module; the water pump module comprises a guide component and a power water pump, and the water outlet, the guide component, and the power water pump are successively connected; the housing has formed therein the first cavity and a second cavity which are arranged separately; the bottom of the housing is provided with a flow channel for reducing resistance when the swimming pool robot moves; and the bottom of the housing is further provided with an inwardly recessed cavity area.

EP 4 660 396 A1

Fig. 1

## Description

TECHNICAL FIELD

The disclosure relates to a swimming pool robot in a technical field of robots.

BACKGROUND

Swimming pool robots are designed for cleaning swimming pools. A current swimming pool robots may fail to judge accurately whether it is exposed from a water surface of a swimming pool when cleaning a waterline near the water surface, and its control terminal may fail to control the swimming pool robot to make expected cleaning operations at the waterline, resulting in a poor cleaning effect.

SUMMARY

Disclosed is a swimming pool robot capable of judging accurately whether it is exposed to the water surface of the swimming pool.
The disclosed swimming pool robot comprises a housing, a filter and a water pump. The housing has a water inlet and a water outlet. The water inlet, the filter and the water outlet are interconnected sequentially, and the water pump and the filter are interconnected. A water-leaving detector is arranged at an end of the housing.
The water-leaving detector comprises a buoyancy device and a sensing device. The buoyancy device is configured to be movable between a first position and a second position. The sensing device is configured to transmit a first signal in response to the buoyancy device being in the first position, and to transmit a second signal in response to the buoyancy device being in the second position.
In the disclosed swimming pool robot, the water-leaving detector is configured at one end of the housing and may make a detection once the swimming pool robot emerges from water surface near the water line, achieving a more sensitive determination on whether the swimming pool robot leaves water. The water-leaving detector comprises the buoyancy device and the sensing device. The buoyancy device may move between the first position and the second position based on whether the swimming pool robot is exposed to the waterline. Then, the sensing device may identify the position of the buoyancy device and transmit the first signal or the second signal to the swimming pool robot, to enable a determination on whether the swimming pool robot is out of the water. Thus, the disclosed swimming pool robot may support an accurate determination on whether the swimming pool robot emerges from the water surface of the swimming pool.

BRIEF DESCRIPTION OF THE DRAWINGS

The present disclosure will be described in detail with reference to examples and attached drawings, in which:

Fig. 1 shows schematically a structure of a swimming pool robot in an embodiment;
Fig. 2 shows schematically the structure of the swimming pool robot in Fig. 1 from another perspective;
Fig. 3 shows schematically the structure of the swimming pool robot in Fig. 1 with an upper cover removed;
Fig. 4 shows a bottom view of the swimming pool robot in Fig. 1;
Fig. 5 shows a front view of the swimming pool robot in Fig. 1 with a side cover removed;
Fig. 6 shows a sectional view of the swimming pool robot in Fig. 1;
Fig. 7 shows schematically the structure of the swimming pool robot in Fig. 1 with an accommodating structure and the housing removed;
Fig. 8 shows an enlarged view of an area A in the swimming pool robot in Fig. 6;
Fig. 9 shows an enlarged view of an area B in the swimming pool robot in Fig. 6;
Fig. 10 is a schematic diagram of the internal structure of the swimming pool robot according to one embodiment of the present invention;
Fig. 11 is a schematic diagram of the internal structure of the swimming pool robot according to another embodiment of the present invention;
Fig. 12 is a schematic diagram of the signal transmission principle of the swimming pool cleaning system according to one embodiment of the present invention;
Fig. 13 is a schematic structural diagram of the swimming pool robot in Embodiment 1;
Fig. 14 is a schematic structural view of the robot moving vertically upward and in an underwater position when cleaning the pool wall in Embodiment 1;
Fig. 15 is a schematic structural diagram of the robot moving vertically upward and beyond the waterline when cleaning the pool wall in Embodiment 1;
Fig. 16 is a schematic structural view of the robot moving vertically upward and in an underwater position when cleaning the pool wall in Embodiment 2;
Fig. 17 is a schematic structural view of the robot moving vertically upward and beyond the waterline when cleaning the pool wall in Embodiment 2;
Fig. 18 is a schematic structural view of the robot moving horizontally and in an underwater position when cleaning the bottom of the pool in Embodiment 2;
Fig. 19 is a schematic structural diagram when the robot moves horizontally and exceeds the waterline when cleaning the bottom of the pool in Embodiment 2;

Fig. 20 is a simplified schematic diagram of the charging system according to the first embodiment of the present invention.

Fig. 21 is a sectional view of a swimming pool robot according to an embodiment of the present invention;

Fig. 22 is a second sectional view of a swimming pool robot according to an embodiment of the present invention;

Fig. 23 is an exploded view of part of the structure of the swimming pool robot according to an embodiment of the present invention;

Fig. 24 is an exploded view of a second filtering device and a quick-release bracket in a swimming pool robot according to an embodiment of the present invention.

DETAILED DESCRIPTION

Embodiments will be further described in detail in connection with the drawings to make the purpose, technical solutions and advantages of the present disclosure more clear. Throughout the drawings illustrating the embodiments, the same reference numerals indicate the same or similar parts, or parts with the same or similar functions. The embodiments described below by referring to the drawings are exemplary, only for explanation, and should not be interpreted as any limitations.

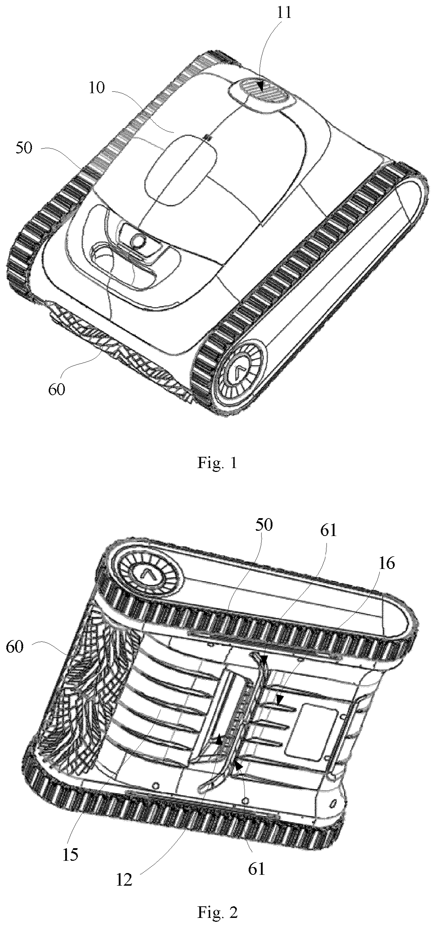

As shown in Fig. 1 to Fig. 6, the disclosed swimming pool robot includes a housing 10, a filter 20, and a water pump 30. The housing 10 has a water inlet 12 and a water outlet 11. The water inlet 12, the filter 20, and the water outlet 11 are sequentially interconnected. The water pump 30 and the filter 20 are interconnected. A driver 50 is further included for driving the swimming pool robot to move. A cleaner 60 is installed on the housing 10, and is connected with and driven by the driver 50. The driver 50 may be configured to simultaneously drive the movement of the swimming pool robot and the operation of the cleaner 60, to achieve a more compact overall structure, a smaller volume, and a lower cost.

For example, the driver 50 may include a power motor, a moving part and a transmission part. The moving part may be connected with the housing 10. The moving part may be driven by the power motor. The power motor may be connected with the transmission part, to drive the cleaner 60 to operate through the transmission part. The cleaner 60 may be configured with a cleaning structure such as a cleaning roller brush or a reciprocating brush head. In some embodiments, the cleaner 60 may be a cleaning roller brush.

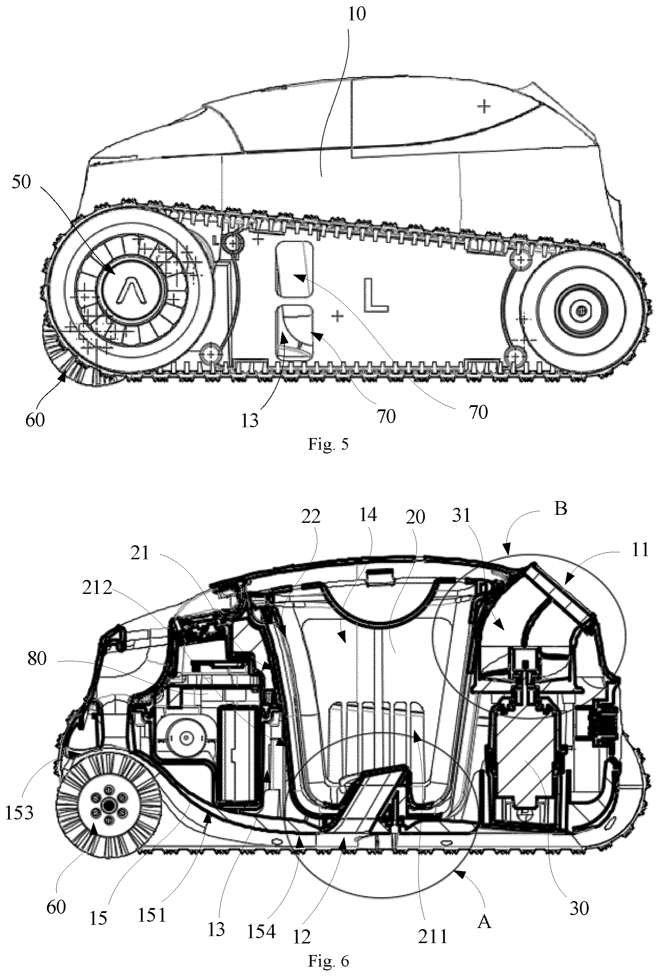

In some embodiments, as shown in Fig. 5 and Fig. 6, the swimming pool robot may further include a drainage part 70. The housing 10 may have a first chamber 13 inside, and the first chamber 13 may be interconnected/disconnected with the outside by the drainage part 70. In a case where the swimming pool robot is exposed to the water for performing corresponding cleaning operations, the buoyancy of the swimming pool robot in the water decreases due to a partial exposure of the swimming pool robot to the water surface, and the driver of the swimming pool robot requires more power to keep the swimming pool robot exposed to the water with the weight unchanged. In addition, when the swimming pool robot is to be lifted by the user, the water accumulated in the first chamber 13 is required to be quickly discharged. Thus, the first chamber 13 is configured in the front part of the swimming pool robot in its traveling direction, and water will enter the first chamber 13 when the swimming pool robot is under the water surface. In addition, the first chamber 13 is interconnected/disconnected with the outside by the drainage part 70, and the water accumulated in the first chamber 13 may be discharged by the drainage part 70 when the swimming pool robot emerges from the water surface, so that an overall weight of the swimming pool robot may be reduced. Thus, for example, the power consumption of the swimming pool robot may be reduced at least when the swimming pool robot emerges from the water surface, and the endurance of the swimming pool robot may be improved. Further, the weight of the robot may be lowered so that the robot may be easily lift.

In some embodiments, as shown in Fig. 5 and Fig. 6, the drainage part 70 may include a drain opening configured on a side wall of the first chamber 13. For example, the drainage part 70 may be a drain opening on a side wall of the first chamber 13. The drain opening may be configured in front of the water inlet 12. With such a simple configuration of the drainage part 70, the water accumulated in the first chamber 13 may be discharged via the drain opening when the drainage part 70 at an end of the robot is exposed out of the water. Further, the drain opening may assist the water inlet 12 in water intake when the swimming pool robot is underwater, to enable the swimming pool robot to sink quickly. In another embodiment, the drainage part 70 may also be electrically controlled to implement the interconnection/disconnection with the outside.

In some embodiments, a water-leaving detector may be configured in the first chamber 13. By configuring the water-leaving detector in the first chamber 13, for example, the water-leaving detector may be protected from damages, and may be prevented from interference from water spray in the swimming pool. Thus, the service life of the water-leaving detector may be prolonged, and a stable performance may be achieved or improved for the water-leaving detector.

In some embodiments, as shown in Fig. 6, the water inlet 12, the filter 20, and the water outlet 11 are sequentially interconnected into a filtering flow channel. The housing 10 may have a first chamber 13 and a second chamber 14 configured inside, which are separated from each other, and the filtering flow channel may be only configured in the first chamber 13 or the second chamber 14. That is, the first chamber 13 and the second chamber 14, which are separated from each other, are configured in the housing 10, and the filtering flow channel is only interconnected with the first chamber 13 or the second chamber 14. Thus, the water entering via the water inlet 12 may only pass through the first chamber 13 or the second chamber 14, so that the space required for the water pump 30 to do work may be greatly reduced, and the water may be pumped with less power. Then, a reduced energy consumption and an improved endurance may be achieved for the swimming pool robot. Thus, for example, the efficiency of filtering and cleaning may be improved with a certain pump power. That is, the disclosed swimming pool robot may have reduced working energy consumption.

The filtering flow channel is configured either in the first chamber 13 or in the second chamber 14. In some embodiments, no absolute isolation or complete sealing is required between the first chamber 13 and the second chamber 14, and the energy consumption may be reduced by making a vast majority of water to flow through the chamber where the filtering flow channel is located. The water pump 30 performs work on the water within the housing 10 during operation, pumping the water out to the exterior of the robot via the water outlet 11. If the internal cavity of the housing 10 is excessively large, the drainage area through which water flows from the bottom of the robot into the housing 10 may also be large, and turbulence or eddies may be easily generated. Then, the water pump may expend unnecessary work and increase energy consumption due to a large amount of work consumption by the water flow in the housing 10, and both the power of the water pump and the endurance of the swimming pool robot are reduced. In the disclosed swimming pool robot, two isolated chambers are configured so that most of the water flow only passes through only one of them, while components such as a sealed compartment for power supply and sensors are installed in the other. Thus, the space through which water flows becomes smaller, and the water flow is constrained, so that phenomena such as turbulence or eddies are reduced, which is conducive to the circulation of water flow. Thus, the efficiency and endurance performance of the robot are improved.

In addition, a power of the water pump 30 nay be determined according to a volume of the first chamber 13 or second chamber 14 interconnected with the filtering flow channel, so that the power of the water pump 30 may be matched with the volume of the chamber, and the water pump 30 may work at a proper power without causing problems such as suffering insufficient suction or wasting energy.

For example, if the filtering flow channel is interconnected with the first chamber 13 or second chamber 14, the other chamber may be utilized for accommodating other components in the swimming pool robot, to achieve a more compact overall structure and a reduced volume for the swimming pool robot. There is no limitation on whether the other chamber is configured to interconnected with the external environment to allow water to enter the chamber from the outside.

In some embodiments, as shown in Fig. 5 to Fig. 7, the first chamber 13 and the second chamber 14 may be partitioned by the filter 20, or by a partition plate fixed on an inner side wall of the housing 10. For example, the first chamber 13 and the second chamber 14 may be partitioned by the filter 20 without any other additional structure, so that an internal structure of the swimming pool robot may be further optimized. For example, the arrangement of respective components in the swimming pool robot may become more compact, and a size of the swimming pool robot may be reduced.

In some embodiments, as shown in Fig. 5 to Fig. 7, the partition plate on the inner side wall of the housing 10 may be a wall of a component in the swimming pool robot. Further, the first chamber 13 and the second chamber 14 may also be partitioned by a partition plate fixed on the inner side wall of the housing 10. The swimming pool robot may look more beautiful by arranging other components than the filter 20 in the other chamber which has been separated from the chamber accommodating the filter 20, considering that the filter 20 may be frequently taken out to clean up the garbage. In another embodiment, the first chamber 13 and the second chamber 14 may also be partitioned by other components such as the driver 50 or a controller 80.

In some embodiments, as shown in Fig. 5 to Fig. 7, the filter 20 may include a garbage filter box 22 and an accommodating structure 21 for accommodating the garbage filter box 22. The first chamber 13 and the second chamber 14 may be partitioned by the accommodating structure 21. For example, the filter 20 includes the accommodating structure 21 and the garbage filter box 22, and the filter 20 is utilized to partition the first chamber 13 from the second chamber 14 while accommodating the garbage filter box 22, so that a more compact structure may be achieved.

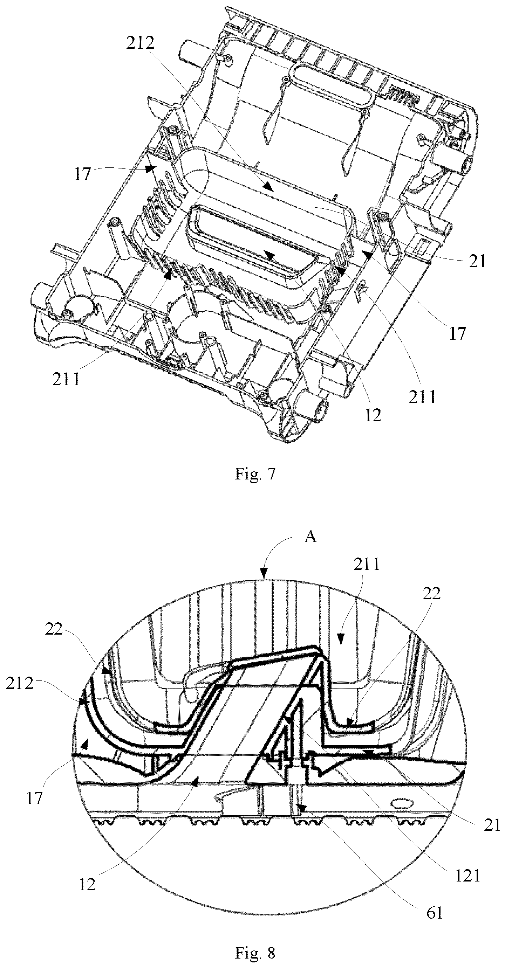

In some embodiments, as shown in Fig. 6 and Fig. 7, a first partition plate 212 may be configured on a side of the accommodating structure 21 to partition the first chamber 13 and the second chamber 14. For example, the first partition plate 212 is arranged on one side of the accommodating structure 21 to partition the first chamber 13 and the second chamber 14, so that a simple structure and a lighter weight may be achieved for the swimming pool robot.

In some embodiments, as shown in Fig. 7, the first partition plate 212 is configured on a side of the accommodating structure 21, and a second partition plate 17 is configured on an inner side wall of the housing 10. The first partition plate 212 and the second partition plate 17 are mutually assembled and attached to jointly partition the first chamber 13 and the second chamber 14. The second partition plate 17 is configured on the inner wall of the housing 10 and is configured to be directly assembled with the first partition plate 212, so that the accommodating structure 21 may be fitted closely with the interior of the housing 10.

In some embodiments, as shown in Fig. 7, the second partition plate 17 is configured to abut and adhere to a side plate of the accommodating structure 21 which is on a different side from where the first partition plate 212 is configured. For example, in a case where the accommodating structure 21 is installed in the housing 10, the second partition plate 17 abuts against and adheres to the side plate of the accommodating structure 21, so that the structure may be simple and easy to disassemble, and a better partition effect may be achieved. In some embodiments, two second partition plates 17 may be configured, which may be configured to respectively abut and attach to two side plates opposite to each other and both adjacent to the first partition plate 212.

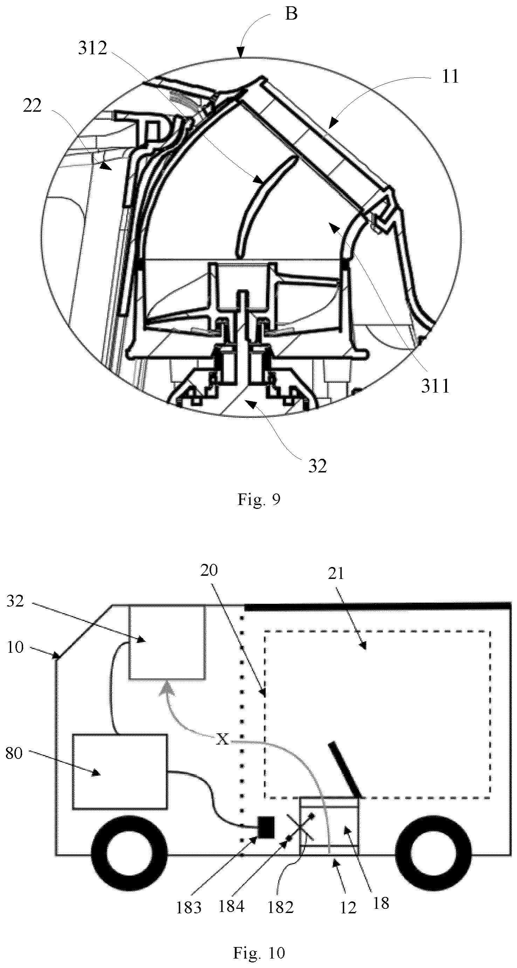

In some embodiments, as shown in Fig. 2, Fig. 5 and Fig. 6, the accommodating structure 21 may be configured in a shape of box. The first partition plate 212 may be configured on a side of the accommodating structure 21, and at least one water channel opening 211 may be configured on the remaining sides. For example, the accommodating structure 21 may be box-shaped, the first partition plate 212 may be configured on one of its sides, and water channel openings 211 may be configured on the remaining sides. Thus, the water filtered by the garbage filtering box 22 may be enabled to quickly flow to the water pump 30 to facilitate the discharge of water and to improve the filtering speed. In some embodiments, as shown in Fig. 6 and Fig. 9, the water pump 30 may include a guide part 31 and a power water pump 32, and the water outlet 11, the guide part 31 and the power water pump 32 are connected in sequence.

The power water pump 32 is configured to provide power to discharge water accumulated in the housing 10 via the water outlet 11, and the guide part 31 is configured to change a direction in which the water is sprayed through the water outlet 11 by the water pump 30, so that a control of the posture of the swimming pool robot may be achieved. In some embodiments, as shown in Fig. 6 and Fig. 9, the guide part 31 may include a guide chamber 311 and a guide vane 312 arranged in the guide chamber 311, wherein one end of the guide chamber 311 is connected with the water outlet 11, and the other end is connected with the power water pump 32.

For example, the guide vane 312 may be arranged in the guide chamber 311, and may be configured to change the direction in which the water is sprayed through the water outlet 11, cooperating with the guide chamber 311. The guide vane 312 has a simple structure, is easy to assemble, and does not increase too much weight.

In some embodiments, as shown in Fig. 6 and Fig. 9, an inclination angle of the water sprayed out through the water outlet 11 relative to a first plane may in a range with an upper limit of 50°. The swimming pool robot may be subjected to a vertical downward force and a horizontal forward force, by configuring the inclination angle of the water sprayed out through the water outlet 11 relative to the first plane in the above range, so that the swimming pool robot may be enabled to move forward in a horizontal direction while moving closely to the underwater plane, which is beneficial for energy conservation. In some embodiments, the inclination angle of the water sprayed out through the water outlet 11 relative to the first plane may be 135°, to make the upward force and the downward force more balanced.

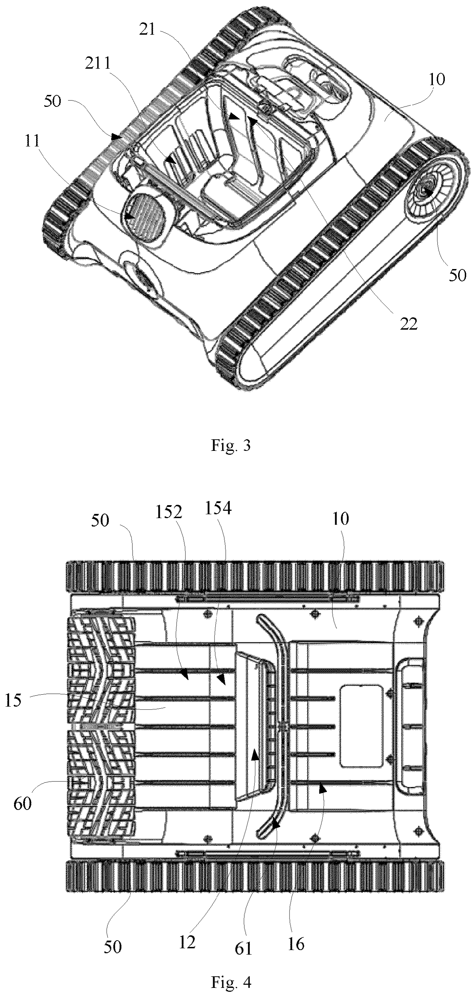

In some embodiments, as shown in Fig. 4 to Fig. 6, the swimming pool robot may further include at least two wheels (the driver 50), by which a plane, i.e. the first plane is defined. A passageway 15 is formed at the bottom of the housing 10, which is from the water inlet 12 to an end of the first plane, and the passageway 15 may have an arc-shaped drainage surface 151.

Water may be enabled to flow backward along the passageway 15 during a movement of the swimming pool robot, by configuring the passageway 15 into a structure with a cambered surface. Thus, the majority of the water flow in the traveling direction may be enabled to flow backward along the flow channel 15 in a streamlined manner, without suffering an excessive resistance at the front end of the first plane, so that energy consumption may be reduced. For example, a reduced water flow resistance may be achieved for the swimming pool robot in the embodiment during movement.

For example, the wheel (the driver 50) in the plane defined by the wheel (the driver 50) may be or include a component configured to drive the swimming pool robot to move, such as a crawler, a roller or a universal wheel. For example, in a case where a plurality of wheels (the driver 50) are all configured in a straight line, that is, in a case where a plane cannot be defined by the plurality of wheels (the driver 50), the plane defined by the wheels (the driver 50) may be a plane defined jointly by the plurality of wheels in the straight line (the driver 50) and the lowest position of the bottom of the housing 10 (that is, a position where the bottom of the housing 10 comes into contact with the surface of the swimming pool when the swimming pool robot is working).

During the swimming pool robot's travelling, a front end of the swimming pool robot in its traveling direction may collide with the water flow, and the water flow may generate resistance opposite to the traveling direction. With the passageway 15, a contact area between the front end of the housing 10 in the traveling direction and the water flow may be reduced. In addition, with the passageway 15 in the cambered surface structure, the water flow resistance generated when the water flow acts on the front end of the housing 10 may have a component parallel to the first plane and a component perpendicular to the first plane. Thus, the resistance may be reduced.

In some embodiments, as shown in Fig. 6, the drainage surface 151 extends forward along the traveling direction of the swimming pool robot to form a water-facing end 153, and the drainage surface 151 extends backward along the traveling direction of the swimming pool robot to form a water-collecting end 154. Two ends of the drainage surface 151 are respectively connected with the water-facing end 153 and the water-collecting end 154 in arc transition. For example, such configurations of the water-facing end 153 and the water-collecting end 154 may match with other structures in the swimming pool robot more effectively for protection and drainage, and the appearance of the swimming pool robot may be more beautiful. In some embodiments, as shown in Fig. 2 and Fig. 6, the water-facing end 153 is configured into a structure with a cambered surface where the housing 10 is recessed inward, and the wheels are arranged at the water-facing end 153.

In some embodiments, the swimming pool robot further includes the cleaner 60, the water-facing end 153 is a structure with a cambered surface where the housing 10 is recessed inward, and the cleaner 60 is arranged below the water-facing end 153. Thus, the water-facing end 153 may be enabled to match with the shape of the cleaner 60 when the cleaner is arranged, and the garbage cleared out by the cleaner 60 may be enabled to move backward along the passageway 15 from the water-facing end 153, to prevent the garbage from accumulating at the cleaner 60. In addition, a better filtering effect may be achieved by configuring the water inlet 12 at the rear of the swimming pool robot.

In some embodiments, as shown in Figs. 2 and 6, any tangent line on the cambered surface from the drainage surface 151 to the water-collecting 154 is not parallel to the first plane, so that the water flow may be more smooth when flowing through the passageway 15, may be close to the bottom surface of the housing 10 where the passageway 15 is located, and may experience uniform force distribution when flowing through passageway 15.

In some embodiments, as shown in Fig. 2 and Fig. 6, the water-collecting end 154 is a cambered structure protruding away from the housing 10. The water-collecting end 154 is configured into a cambered surface structure that protrudes away from the housing 10, and is arranged in front of the water inlet 12 in the travelling direction of the swimming pool robot, so that the water flow may automatically converge at the water inlet 12, thereby achieving faster inlet speed and reducing the energy consumption of the water pump 30. In some embodiments, as shown in Fig. 2 and Fig. 6, an inclination angle of any tangent line on the cambered surface from the drainage surface 151 to the water-collecting end 154 relative to the first plane may be greater than 0° and not greater than 65°. The water flow resistance in the travelling direction may be increased with either too small angle or too large angle, making it difficult to better reduce the water flow resistance. Thus, a range of an inclination angle of the passageway 15 relative to the first plane may be set to be greater than 0° and not greater than 65°.

In some embodiments, as shown in Fig. 6 and Fig. 8, the water inlet 12 is concave toward the inside of the housing 10, forming a guide plate 121, wherein a range of an inclination angle of the guide plate 121 relative to the first plane may be 50° to 80°.

For example, the water inlet 12 is recessed toward the inside of the housing 10 to form the guide plate 121. The direction of water flow entering the interior of the housing 10 from the outside may be restricted by the guide plate 121, so that the water may directly flow into the filter 20 to achieve better filtering effect. In addition, the water flow near the water inlet 12 may be received better by setting the range of inclination angle of the guide plate 121 relative to the travelling direction to 50° to 80°, so that the water flow may still have a certain velocity near the water inlet 12, and thus the power of the water pump 30 may be reduced and energy consumption may be lowered.

In some embodiments, the inclination angle of the guide plate 121 relative to the first plane may range from 55° to 75°, so that the water near the water inlet 12 may enter the water inlet 12 more easily. A vertical height of the guide plate 121 may be higher than the bottom plate of the filter 20, for facilitating garbage deposition.

In some embodiments, as shown in Fig. 2 and Fig. 4, the swimming pool robot may further include at least two wheels (the driver 50) defining a plane, that is, the first plane. The bottom of the housing 10 may be recessed inward to form a cavity area, and the top surface of the cavity area may be higher than the first plane. For example, the bottom of the housing 10 is recessed inward to form the cavity area, and the top surface of the cavity area is higher than the first plane, so that the swimming pool robot may be prevented from being unable to lift upward due to the bottom of its housing 10 being adsorbed on the surface of the swimming pool by a water outlet of the swimming pool, and so that the operator may be enabled to lift the swimming pool robot smoothly.

In some embodiments, as shown in Fig. 2 and Fig. 4, a grille 16 may be further configured in the cavity area, and a length direction of the grille 16 may be arranged along the traveling direction of the swimming pool robot. For example, the grille 16 is configured in the cavity area, and the length direction of the grille 16 is arranged along the traveling direction of the swimming pool robot, thereby preventing the bottom of the housing 10 from obstructing the water flow and increasing resistance, and also better preventing the bottom of the housing 10 from being adsorbed. In some embodiments, as shown in Fig. 2 and Fig. 4, the spacing between any two adjacent grilles 16 may range from 30 mm to 40 mm. In some embodiments, the length of the water inlet 12 may range from 150 mm to 175 mm.

In some embodiments, as shown in Fig. 2, Fig. 4 and Fig. 8, the water inlet 12 may be arranged at the bottom of the housing 10, and a cleaning brush 61 may be arranged at the bottom of the housing 10. The cleaning brush 61 may be behind the water inlet 12 along the traveling direction of the swimming pool robot. The cleaning brush 61 is arranged behind the water inlet 12, so that the surface of the swimming pool behind the water inlet 12 may be cleaned by the cleaning brush 61, and the surface of the swimming pool may be cleaned more cleanly. In addition, by configuring the cleaning brush 61 at the rear, the garbage that does not enter the water inlet 12 for filtering may be blocked, and the garbage cleaned by the cleaning brush 61 may enter the water inlet 12 and be filtered by the filter 20. In some embodiments, as shown in Fig. 2, Fig. 4 and Fig. 8, the length of the cleaning brush 61 may be not less than the length of the water inlet 12, and the cleaning brush 61 may be arranged side by side with the water inlet 12. In some embodiments, as shown in Fig. 2, Fig. 4 and Fig. 8, a distance between the cleaning brush 61 and the water inlet 12 may range from 12 mm to 32 mm.

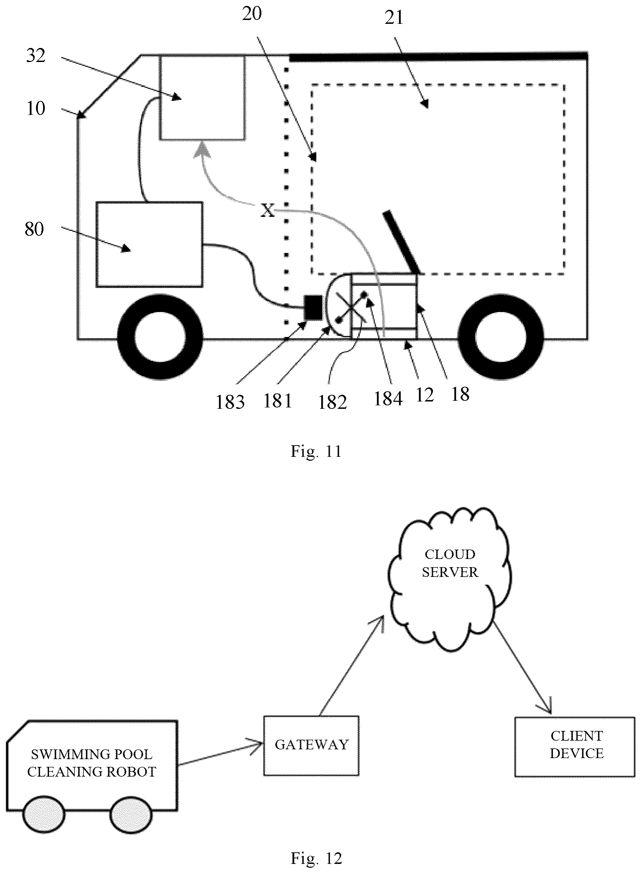

In some embodiments, as shown in Figures 10 and 11. Specifically, the housing 10, the control component 80, the water flow velocity detection device, the filter 20 and the power pump 32 are arranged in the housing 10. The control component 80 is connected with the water flow velocity detection device, and the housing 10 is provided with a water inlet 12 and a water outlet. The housing 10 is provided with a water channel 18 communicating with the water inlet 12 and the water outlet, and the filter 20 is arranged in the water flow velocity detection device.

Further, in the swimming pool robot of the present invention, the water flow velocity detection device comprises a first impeller 182 and a Hall sensor 183, the control component 80 is connected with the Hall sensor 183, and the power pump 32 and the first impeller 182 are at least partially arranged in the water flow channel 18; The Hall sensor 183 is arranged near the first impeller 182, and the first impeller 182 is provided with at least one first magnetic piece 184 corresponding to the Hall sensor 183.

As can be seen from the above description, in the present invention, the inventor has optimally designed a brand-new swimming pool robot. When the swimming pool robot is actually applied, the power pump 32 partially arranged in the water flow channel 18 can effectively pump sewage from the water inlet 12 into the housing 10 to make the sewage flow in the water flow channel 18, so that the sewage entering the water flow channel 18 can be discharged from the water outlet after being filtered by the filter 20. Among them, the arrow X in both Figure 10 and Figure 11 indicates the flow path of water. Different from the prior art, in the swimming pool robot designed by the invention, a water flow velocity detection device partially arranged in the water flow channel 18 is also installed in the housing 10 to detect the water flow velocity in the water flow channel 18.

Among them, the water flow velocity detection device designed by the present invention can specifically include a first impeller 182 and a Hall sensor 183, which partially arranges the first impeller 182 in the water flow channel 18, and at the same time, at least one first magnetic piece 184 is arranged on the first impeller 182, so as to form a low-cost and open water flow meter through the cooperation of the first impeller 182 and the Hall sensor 183. The water flow velocity detection device composed of the first impeller 182 and the Hall sensor 183 is simple in structure, simple in installation, low in waterproof requirement, low in cost, easy to implement and high in reliability.

In the present invention, when the water flows in the water channel 18, it will push the first impeller 182 to rotate around its own axis of rotation. The higher the blocking degree of the filter 20, the slower the water flow speed in the water channel 18 and the slower the rotation of the first impeller 182. Conversely, the lower the clogging degree of the filter 20, the faster the water flow velocity in the water flow channel 18 and the faster the first impeller 182 rotates. When the first impeller 182 rotates around its own rotation axis, the first magnetic member 184 installed on the first impeller 182 will periodically act on the Hall sensor 183, so that the Hall sensor 183 is periodically turned on. At this time, the control component 80 can calculate the rotation speed of the first impeller 182 by measuring the periodic pulse signal generated by the Hall sensor 183, and then judge the current water flow speed in the water flow channel 18, so as to obtain the blocking situation of the filter 20 of the swimming pool robot.

It should be pointed out that in the present invention, the Hall sensor 183 is located near the first impeller 182 because the Hall sensor 183 is located near the first impeller 182, which can drive the first magnetic member 184 to pass through the sensing range of the Hall sensor 183 while ensuring that the first impeller 182 rotates around its own rotation axis under the impetus of water flow. When the first magnetic element 184 passes through the induction range of the Hall sensor 183, it can trigger the Hall sensor 183 to generate a pulse signal with periodicity, and the Hall sensor 183 can correspondingly transmit the pulse signal to the control component 80.

Accordingly, in the actual design of this swimming pool robot, the operator can also set a preset threshold in advance. When the rotation speed of the first impeller 182 calculated by the control component 80 according to the periodic pulse signal generated by the Hall sensor 183 is greater than the preset threshold, it can be judged that the current swimming pool robot has a normal flow speed and can maintain the normal cleaning of the swimming pool. On the contrary, if the rotation speed of the first impeller 182 calculated by the control component 80 according to the periodic pulse signal generated by the Hall sensor 183 is less than the preset threshold, it can be judged that the filter 20 of the swimming pool robot is blocked, and the user can be alerted in time to prompt the user to clean the filter 20.

Further, in the swimming pool robot of the present invention, the first impeller 182 is arranged at one end of the water flow channel 18 close to the water inlet 12 or the water outlet. as shown in Fig. 10 and fig. 11. In the technical scheme of the present invention, in some specific embodiments, the first impeller 182 can be specifically arranged at one end of the water flow channel 18 near the water inlet 12 or the water outlet, because the water flow near the water inlet 12 or the water outlet is more stable, and the rotation of the first impeller 182 around its own rotation axis is more stable. So as to make the periodic pulse signal generated by the Hall sensor 183 more accurate, thereby facilitating the control component 80 to accurately judge the current rotation speed of the first impeller 182, and further more accurately reflecting the blocking degree of the filter 20 in the swimming pool robot.

Further, in the swimming pool robot according to the present invention, the first impeller 182 includes a rotating shaft and a plurality of blades connected to the rotating shaft, and the shapes and sizes of the blades are the same as those of the cross-sectional area of the water flow channel 18. Further, in the swimming pool robot according to the present invention, the first impeller 182 is provided with two first magnetic pieces 184, and the two first magnetic pieces 184 are respectively provided on the two blades arranged opposite to each other.

In the above technical scheme of the present invention, the designed first impeller 182 can include a rotating shaft and a plurality of blades, and these blades can be connected with the rotating shaft, so that when the first impeller 182 rotates, all the blades can rotate around the axis of the rotating shaft. It should be pointed out that the reason why the shape and size of the blade are controlled to be the same as that of the cross-sectional area of the water flow channel 18 is because this arrangement can ensure that the shape of the blade is larger, and it is convenient for the blade to fully accept the impact of the water flow and thus rotate.

Accordingly, as shown in Fig. 10 and fig. 11. In some embodiments, the first impeller 182 may include a rotating shaft and four blades connected with the rotating shaft, and the four blades are evenly arranged at 90 degrees from each other. In practical application, the first impeller 182 can be specifically provided with two first magnetic pieces 184, and the two first magnetic pieces 184 can be respectively provided on two blades arranged opposite to each other. Of course, in some other embodiments, more first magnetic members 184 can be provided, so that the Hall sensor 183 can be triggered more times when the first impeller 182 rotates once, so that the Hall sensor 183 can generate more signals and make it more sensitive, so as to ensure that the rotation speed of the first impeller 182 can be accurately measured even when the water flow speed in the water flow channel 18 is slow. It should be pointed out that the first impeller 182 will rotate around its own axis of rotation driven by the water flow. The higher the blocking degree of the filter 20, the slower the water flow speed in the water flow channel 18 and the slower the rotation of the first impeller 182. At the same time, the first magnetic element 184 installed on the blades of the first impeller 182 will periodically act on the Hall sensor 183, so that the Hall sensor 183 will be periodically turned on. At this time, the control component 80 can calculate the rotation speed of the first impeller 182 by measuring the periodic pulse signal generated by the Hall sensor 183, and then judge the current water flow speed in the water flow channel 18, so as to obtain the blockage of the filter 20 of the swimming pool robot.

Assuming that the first impeller 182 is equipped with n first magnetic pieces 184, one revolution will trigger the Hall sensor 183 to generate n pulse signals, and the pulse signal period of the Hall sensor 183 measured by the control component 80 is t, then the calculation formula of the rotation speed w of the first impeller 182 is as follows:

$$w = 60 \; / \; (n * t)$$

Where, w represents the rotating speed of the impeller, and its unit parameter is rpm (revolutions per minute), and t is the pulse signal period of the Hall sensor 183 measured by the controller, and its unit parameter is ms (milliseconds). Therefore, when the operator calibrates the mapping relationship between the rotating speed w of the impeller and the filter clogging degree in advance, the filter clogging degree of the swimming pool robot can be judged according to the mapping relationship and the rotating speed w of the impeller acquired in real time.

Further, in the swimming pool robot according to the present invention, the water flow channel 18 is provided with a recess 181, and the first impeller 182 is at least partially arranged in the recess 181. Further, in the swimming pool robot of the present invention, at least half of the first impeller 182 is disposed in the recess 181. In the above technical scheme of the present invention, the water flow channel 18 can also be provided with a concave part 181, and the first impeller 182 can be at least partially arranged in the concave part 181, and the concave part 181 can block part of the water flow, thus preventing the technical problem that the first impeller 182 cannot rotate around its own rotation axis due to the balance of the acting force of the water flow on the first impeller 182. Accordingly, in some embodiments, it is also preferable to control at least half of the first impellers 182 to be arranged in the recessed portion 181 in the water flow channel 18 when actually arranged.

Further, in the swimming pool robot of the present invention, the water flow channel 18 further includes a detection channel, the cross-sectional area of which is smaller than that of the rest of the water flow channel 18, and the first impeller 182 is at least partially arranged in the detection channel. In the above technical scheme of the present invention, the reason why the first impeller 182 is at least partially arranged in the detection channel, and the cross-sectional area of the detection channel is controlled to be smaller than that of the rest of the water flow channel 18, is that the cross-sectional area of the detection channel is the smallest, and the flow speed of the water will increase when it passes through the detection channel, so that the water flow can obtain greater kinetic energy, thereby avoiding that the water flow cannot drive the first impeller 182 to rotate around its own rotation axis.

Further, the swimming pool robot according to the present invention further comprises an alarm device, which is arranged on the housing 10 and electrically connected with the control component 80; Wherein the alarm device comprises at least one of an indicator lamp, a buzzer and a vibrator. At present, when the swimming pool robot is cleaning for a period of time, the filter 20 will be blocked due to the accumulation of dust, which will lead to the gradual decrease of water intake and water discharge, thus causing the cleaning ability of the swimming pool robot to decrease continuously. If the swimming pool is particularly dirty, the filter 20 of the swimming pool robot will be blocked quickly, and the subsequent cleaning will be ineffective, which is easy to cause users' complaints. Therefore, when the swimming pool robot is actually applied, an alarm device can also be provided on the swimming pool robot, which can include at least one of an indicator lamp, a buzzer and a vibrator. Once the control component 80 judges that the water flow rate in the water flow channel 18 is lower than a preset threshold according to the rotation speed of the first impeller 182 calculated by the periodic pulse signal generated by the Hall sensor 183, it is judged that the current filter 20 is blocked; At this time, the control component 80 can send an alarm signal to the alarm device, the indicator light of the alarm device can light up, the buzzer can sound an alarm, and the vibrator can start to vibrate, so as to prompt the user to clean the filter 20 of the swimming pool robot in time.

Further, the swimming pool robot according to the present invention further comprises a communication device, which is arranged in the housing 10 and electrically connected with the control component 80. In the present invention, in order to facilitate the swimming pool robot to transmit its own blocking situation against the filter 20 to the external equipment, in some embodiments, the swimming pool robot can also be provided with a communication device, which is electrically connected with the control component 80 and can be wirelessly connected with the external equipment.

As shown in fig. 12, correspondingly, in the present invention, the inventor also designed a swimming pool cleaning system, which includes: user equipment, a cloud server and the swimming pool robot mentioned above, wherein the swimming pool robot is directly or indirectly connected with the cloud server in communication, and the user equipment is connected with the cloud server in communication. It can be seen from the above technical scheme of the present invention that in practical application, the swimming pool robot can also be controlled to directly or indirectly connect with the cloud server, so as to send the blocking situation of its own filter 20 to the cloud server. At this time, the user can obtain the information of the cloud server by using the user equipment (mobile phone or tablet computer) that he carries with him, and then the blocking situation of the filter 20 of the swimming pool robot can be obtained. It should be noted that in some cases, the swimming pool robot can be directly connected with the cloud server in wireless communication, and in some embodiments, the swimming pool robot can also be indirectly connected with the cloud server through a gateway.

In this embodiment, the swimming pool robot specifically comprises a housing 10, a filter 20, a power water pump 32, a control component 80, a communication device and a water flow velocity detection device, wherein the housing 10 is provided with a water inlet 12 and a water outlet, and the housing 10 is provided with a water flow channel 18 which is respectively interconnected with the water inlet 12 and the water outlet. The water flow velocity detection device comprises a first impeller 182 and a Hall sensor 183, the filter 20 is arranged in the water flow channel 18, the first impeller 182 and the power pump 32 are at least partially arranged in the water flow channel 18, the Hall sensor 183 is arranged close to the first impeller 182, and the power pump 32, the communication device and the Hall sensor 183 are all connected with the control component 80.

Accordingly, with further reference to fig. 11, it can be seen that in this embodiment, the first impeller 182 in the water flow velocity detection device specifically includes a rotating shaft and four blades, all of which are connected with the rotating shaft. Among them, the first impeller 182 is also provided with two first magnetic pieces 184, and these two first magnetic pieces 184 are respectively provided on two blades arranged opposite to each other. As shown in fig. 11, in this embodiment, the water flow channel 18 includes a detection channel located at one end of the water flow channel 18 near the water inlet 12, and the cross-sectional area of the detection channel is smaller than that of the rest of the water flow channel 18. In this embodiment, the detection channel is further provided with a recess 181, so that the first impeller 182 can be completely arranged in the detection channel, and the first impeller 182 can be partially arranged in the recess 181 of the detection channel.

In this embodiment, when the water flows in the water flow channel 18, the first impeller 182 will be pushed to rotate around its own rotation axis, and arrows X in Figure 11 all indicate the flow path of the water flow; The higher the clogging degree of the filter 20, the slower the water flow velocity in the water flow channel 18 and the slower the rotation of the first impeller 182. Conversely, the lower the clogging degree of the filter 20, the faster the water flow velocity in the water flow channel 18 and the faster the first impeller 182 rotates. When the first impeller 182 rotates around its own axis of rotation, the first magnetic element 184 installed on the first impeller 182 will periodically act on the Hall sensor 183, so that the Hall sensor 183 is periodically turned on, and at this time, the Hall sensor 183 will generate periodic pulse signals. The control component 80 can calculate the rotation speed of the first impeller 182 by measuring the periodic pulse signal generated by the Hall sensor 183, and then judge the current water flow speed in the water flow channel 18, so as to obtain the blockage of the filter 20 of the swimming pool robot.

Before the swimming pool robot of the first embodiment is actually applied, it is necessary to set a preset threshold in advance. When the rotation speed of the first impeller 182 calculated by the control component 80 according to the periodic pulse signal generated by the Hall sensor 183 is greater than the preset threshold, it can be judged that the current swimming pool robot has normal flow speed and can maintain the normal cleaning of the swimming pool. Conversely, if the rotation speed of the first impeller 182 calculated by the control component 80 according to the periodic pulse signal generated by the Hall sensor 183 is less than the preset threshold, it can be judged that the filter 20 of the swimming pool robot is blocked.

When the swimming pool robot is started to work, the power pump 32 can pump water into the housing 10 from the water inlet 12. After the water enters the housing 10, it will flow along the water channel 18, be filtered by the filter 20 and be discharged from the water outlet, and the filtered waste will enter the accommodating structure 21. During the operation of the swimming pool robot, when the water flows in the water channel 18, the flow rate and velocity will be generated. When the water flows in the water channel 18, it will push the first impeller 182 to rotate around its own rotation axis, so that the two first magnetic pieces 184 installed on the first impeller 182 will periodically act on the Hall sensor 183, so that the Hall sensor 183 will be periodically turned on and generate pulse signals. At this time, the control component 80 can calculate the first impeller by measuring the periodic pulse signals generated by the Hall sensor 183.

Once the rotation speed of the first impeller 182 calculated by the control component 80 according to the periodic pulse signal generated by the Hall sensor 183 is less than the preset threshold, it is judged that the filter 20 of the current swimming pool robot is blocked; At this time, the control component 80 can send an alarm signal to the alarm device. At this time, the indicator light of the alarm device can light up, the buzzer can sound an alarm sound, and the vibrator starts to vibrate to remind the user to clean the filter 20 of the swimming pool robot in time.

In practical application, the control component 80 can send the congestion information of the filter 20 of the current swimming pool robot to the cloud server in real time through the communication device, and the user can receive the congestion information of the filter 20 of the current swimming pool robot from the user equipment by realizing wireless communication connection with the cloud server. For example, when the filter 20 is blocked, the control component 80 can send a blocking signal to the gateway on the shore through the communication component, and then send the blocking signal of the related filter 20 to the cloud server through the gateway connected with the cloud server, and the cloud server stores it and finally sends it to the user equipment to warn the user that the filter 20 of the swimming pool robot needs to be cleaned.

To sum up, it can be seen that in the present invention, the inventor optimized and designed a brand-new swimming pool robot, which added the first impeller 182 and the Hall sensor 183 to the swimming pool robot, so as to make use of the cooperation of the first impeller 182 and the Hall sensor 183 to form a low-cost and open water flow meter. The installation of a simple flowmeter composed of the first impeller 182 and the Hall sensor 183 is relatively simple, with low waterproof requirements, low cost, easy implementation and reliable function. The Hall sensor 183 can generate periodic pulse signals when the first impeller 182 with the first magnetic element 184 rotates, and the control component 80 can calculate the rotation speed of the first impeller 182 according to the periodic pulse signals generated by the Hall sensor 183. So as to monitor the water flow velocity in the water flow channel 18 through the rotation speed of the first impeller 182, and judge the blocking degree of the filter 20 of the swimming pool robot according to the water flow velocity in the water flow channel 18.

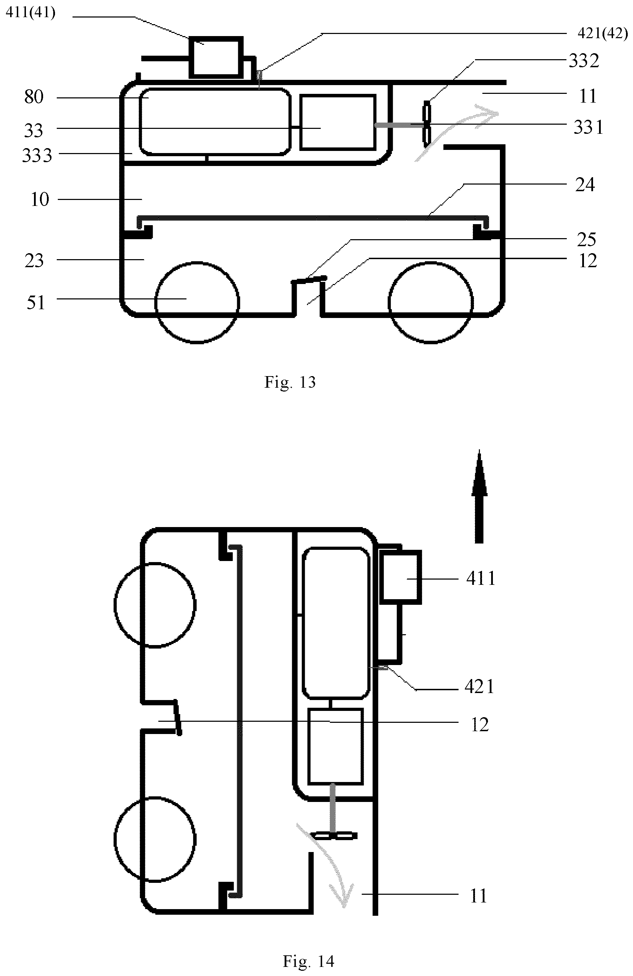

as shown in Figs. 13- 19. The swimming pool robot further includes a water-leaving detector located at one end of the housing 10. The water-leaving detector includes a buoyancy device 41 and a sensing device 42. The buoyancy device 41 can move between a first position and a second position. When the buoyancy device 41 is located at the first position, the sensing device 42 sends out a first signal. When the buoyancy device 41 is in the second position, the sensing device 42 sends out a second signal. By arranging the water-leaving detector at one end of the housing 10, the swimming pool robot can be detected by the water-leaving detector when it just exposes the waterline of the swimming pool, so that the judgment of whether the swimming pool robot is out of water is more sensitive. The water-leaving detector includes a buoyancy device 41 and a sensing device 42, which can change the magnitude and presence of buoyancy received by the buoyancy device 41 according to whether the swimming pool robot is exposed to the waterline or not, so as to make the buoyancy device 41 move between the first position and the second position, and then identify the position of the buoyancy device 41 through the sensing device 42, and send a first signal or a second signal to the swimming pool robot, so as to judge whether the swimming pool robot is exposed to the water. Compared with the prior art, the swimming pool robot disclosed by the invention can achieve the purpose of accurately judging whether the swimming pool robot is exposed out of the water surface of the swimming pool.

In some embodiments, the water-leaving detector is in signal connection with the water pump 30, and the water pump 30 outputs different powers through the first signal/second signal sent by the water-leaving detector. Obviously, in other embodiments, it is also possible to judge whether the swimming pool robot is out of the water through the water-leaving detector, and other operations can be realized by combining with other technical means.

The water-leaving detector includes a buoyancy device 41 and a sensing device 42, wherein for the buoyancy device 41, the buoyancy device 41 refers to an object that can respond to the buoyancy of a water body, such as a buoyancy block. It should be explained that it is not limited that the buoyancy device 41 must float on the water, but it can also float in the water. For example, the buoyancy device 41 is a buoyancy ball filled with water, which can float in the water when placed in the water. When there is no water around the buoyancy ball, its buoyancy ball will naturally fall to the bottom, thus moving between the first position and the second position. At this time, the sensing device 42 is a pressure sensor, and the buoyancy ball naturally falls to the bottom pressure.

It should be noted that the present invention does not limit whether the water-leaving detectors are arranged outside or inside the housing 10 and the number of the water-leaving detectors. Setting the water-leaving detector at one end of the housing 10 means that the water-leaving detector can be set at the upper end, lower end, front end, rear end, left end or right end of the housing 10, because some types of swimming pool robots can move in multiple directions, so the position where the water first emerges from the water is not necessarily the front end of the housing 10. In addition, by changing the position of the water-leaving detector, the early warning of the limit position where the swimming pool robot can be exposed to the water can be realized, and the specific posture of the swimming pool robot when exposed to the water can also be judged by setting a plurality of water-leaving detectors.

In some embodiments, the buoyancy device 41 always keeps the same posture relative to the water surface, and the buoyancy device 41 has a first posture and a second posture relative to the sensing device 42. When the buoyancy device 41 is in the first posture, the sensing device 42 sends out a third signal, and when the buoyancy device 41 is in the second posture, the sensing device 42 sends out a fourth signal. The posture of the swimming pool robot can be judged by the first posture and the second posture of the buoyancy device 41. For example, the buoyancy device 41 is a plate-shaped buoyancy block which is always parallel to the water surface. The swimming pool robot is laid flat in the swimming pool. If the sensing device 42 is arranged directly below the buoyancy block, the contour of the buoyancy block recognized by the sensing device 42 at this time is the front contour of the plate-shaped buoyancy block, and this posture is the first posture. When the swimming pool robot is vertically placed in the swimming pool, the buoyancy block is always parallel to the water surface, but the sensing device 42 will change with the posture of the swimming pool robot, so that the buoyancy block profile recognized by the sensing device 42 at this time is the side thickness profile of the plate buoyancy block, which is the second posture. The sensing device 42 may be two position sensors arranged in different directions, or a capture camera.

In some embodiments, as shown in Figure 13. The buoyancy device 41 is a buoyancy block, and the sensing device 42 is a position sensor. The buoyancy block moves between a first position and a second position according to the buoyancy it receives, and the position sensor is arranged on the movement path of the buoyancy block. It should be noted that the buoyancy device 41 is a buoyancy block, and the sensing device 42 is a position sensor. The position sensor is arranged on the motion path of the buoyancy block, which means that the position sensor can monitor the position of the buoyancy block, and its identification difference is only on the motion path of the buoyancy block. In some embodiments, the position sensor is an optical position sensor, and the optical path of the optical position sensor passes through the movement path of the buoyancy block, and the optical position sensor can identify when its optical path is blocked by the buoyancy block. Specifically, the water-leaving detector also includes a slide bar, which is fixedly connected with the housing 10, a buoyancy block is slidably connected to the slide bar, and a position sensor is located at the bottom of the slide bar, and the position sensor is used to detect the position of the buoyancy block on the slide bar during the movement of the swimming pool robot, thus realizing the water-leaving detection of the swimming pool robot.

When the swimming pool robot moves in the underwater position and the water surface is higher than the top of the sliding bar, the buoyancy block is kept at the top of the sliding bar under the buoyancy; When the swimming pool robot continues to move upward, and the water surface is between the top and bottom of the sliding bar, the buoyancy block slides vertically downward along the sliding bar under the buoyancy of water and its own gravity; When the swimming pool robot continues to move upwards, and the water surface does not exceed the bottom of the slide bar, the buoyancy block is at the bottom of the slide bar under its own gravity, and the position sensor detects the position of the buoyancy block, and at this time sends out the corresponding first signal. It should be explained that when the buoyancy block is at other positions, the position sensor sends out the second signal. In addition, position sensors can be arranged at different positions of the sliding bar, so that the second signal can be sent out.

In some embodiments, when the buoyancy device 41 is continuously in the first position, the sensing device 42 sends out a first signal. Therefore, it is more accurate to judge whether the swimming pool robot is exposed to the water. It should be noted that the buoyancy device 41 stays in the first position for less than a few seconds, so that the judgment of whether the swimming pool robot is exposed to the water is not too lagging behind.

Among them, the application can take "stop sending of the first signal" as the second signal. Taking the above embodiment as an example, when the buoyancy block is at the bottom of the slide bar under its own gravity, the first signal is sent out, and when the buoyancy block is not at the bottom of the slide bar, the first signal stopped is taken as the second signal. It should be noted that at this time, it is necessary to continuously send out the first signal to make an accurate judgment on whether the swimming pool robot is exposed to the water, especially in the scene where the swimming pool robot needs to enter and exit the waterline frequently. In other embodiments, the sensing device 42 may also be a camera unit. In addition, the sensing device 42 can be monitored remotely.

In some embodiments, the buoyancy device 41 is a buoyancy block, and the sensing device 42 is an angle sensor. The buoyancy block is rotatably connected with the housing 10, and swings between a first position and a second position according to the buoyancy it receives. The angle sensor detects the swing angle of the buoyancy block and sends out a first signal/a second signal.

Specifically, the water-leaving detector also comprises a swing rod and a limit block, one end of the swing rod is rotatably connected with the housing 10, and the other end is connected with a buoyancy block; the limit block is fixedly installed on the housing 10 and located on the rotation stroke of the swing rod for limiting the rotation angle of the swing rod; the angle sensor is connected with the rotation shaft of the swing rod; and the angle sensor is used to detect the rotation angle of the swing rod driven by the buoyancy block during the movement of the swimming pool robot, so that the water-leaving detection of the swimming pool robot is realized.

When the swimming pool robot moves in the underwater position, and the water surface is higher than the highest position that the buoyancy block can reach, the buoyancy block continues to be at the highest position under the buoyancy effect, and the swing arm is at the maximum angle; When the swimming pool robot continues to move upward, and the water surface is between the highest position and the lowest position that the buoyancy block can reach, the buoyancy block reduces the swing angle under the buoyancy effect of water and its own gravity; When the swimming pool robot continues to move upwards, and the water surface does not exceed the lowest position of the buoyancy block, the buoyancy block is at the lowest position under its own gravity, and the angle sensor detects the position of the buoyancy block, and then sends out the corresponding first signal.

In some embodiments, the buoyancy device 41 is a buoyancy block, the sensing device 42 is a Hall sensor, and the water-leaving detector further includes a magnetic element. One of the Hall sensor and the magnetic element is connected with the buoyancy block and the other is connected with the housing 10, and the buoyancy block is rotationally connected with the housing 10. The buoyancy block swings between the first position and the second position according to different buoyancy, and the Hall sensor and the magnetic element are connected/disconnected with the swinging angle of the buoyancy block.

Specifically, the water-leaving detector further comprises a magnetic element, a swing rod and a limit block, wherein one end of the swing rod is rotatably connected with the housing 10, and the other end is connected with the buoyancy block; the limit block is fixedly installed on the housing 10 and located on the rotation stroke of the swing rod for limiting the rotation angle of the swing rod; the magnetic element is arranged on the buoyancy block; the Hall sensor is fixedly connected with the housing 10 and located at the lowest position of the buoyancy block; The Hall sensor is used to detect that the buoyancy block drives the magnetic element to approach or go away during the movement of the swimming pool robot, so that the connection/disconnection between the Hall sensor and the magnetic element occurs, and then the water separation detection of the swimming pool robot is realized.

In some embodiments, referring to figs. 1 to 5, the swimming pool robot further comprises a driver 50 for driving the swimming pool robot to move; The control component 80 is in signal connection with the water-leaving detector and the driver 50, and receives the first signal/second signal sent by the sensing device 42 and controls the driver 50 to be turned on and off. Specifically, by providing the driver 50 and the control component 80, the control component 80 can receive the first signal/second signal sent by the sensing device 42, and control the driver 50 to open and close through the first signal/second signal, so that the swimming pool robot can accurately move up and down near the waterline of the side wall of the swimming pool, thus making the cleaning effect better and cleaning the sundries more thorough. In this application, the water pump 30 is interconnected with the filter 20, and its function is to provide suction to suck the water in the swimming pool from the water inlet 12, then pass through the filter 20, and then spray it out from the water outlet 11, thus playing a role in filtering the water in the swimming pool. In some embodiments, the water sprayed from the water outlet 11 forms a backward recoil force, so that downward pressure can be formed, so that the swimming pool robot can be attached to the surface of the swimming pool.

The swimming pool robot capable of detecting water leaving as shown in fig. 13 includes a housing 10, a traveling wheel set 51, a filter chamber 23, a detection device, a control device, a first sealed chamber 333 and a water outlet 11. The detection device, namely a water leaving detection component, is arranged on the swimming pool robot, which is used for cleaning the water level line when cleaning the wall or bottom of the pool, and detecting whether the swimming pool robot is out of water at the same time, so as to prevent itself from exceeding the water surface and inhaling a large amount of air, thus affecting the water absorption of the swimming pool robot.

Specifically, the traveling wheel set 51, which includes two sets of wheels, is installed at the bottom of the housing 10 for driving the housing 10 to move.

Specifically, the filter chamber 23 is opened inside the housing 10 and located at the bottom of the housing 10; The filter chamber 23 includes:

The water inlet 12 is opened at the bottom of the filter chamber 23 and located between the traveling wheel sets 51; The water inlet 12 communicates the filter chamber 23 with the outside and is separated by the first chamber cover 25. The filter screen 24 is arranged at that top of the filter chamber 23 and used for filtering the garbage in the swim pool water and collecting the garbage into the filter chamber 23.

Specifically, the detection device, that is, the water-out detection component, is installed on the housing 10 for detecting whether the housing 10 is out of water.

In this embodiment, the detection device comprises a sliding bar detection device, which comprises a sliding bar 411 arranged at the top of the housing 10; A first buoyancy block 411 slidably connected to the slide bar 411; The position sensor 421, that is, the sensing device 42, is arranged at one end of the slide bar 411 near the water outlet 11 for detecting the position of the first buoyancy block 411 on the slide bar 411. By setting the sliding bar detection device, the position of the first buoyancy block 411 on the sliding bar 411 is detected by the position sensor 421 during the cleaning of the pool wall, and the swimming pool robot is detected to avoid exceeding the water level.

Specifically, the first sealed bin 333 is opened in the housing 10 and located above the filter chamber bin 23. Specifically, the water outlet 11 is opened in the housing 10 and horizontally arranged with the first sealed bin 333; The water outlet 11 communicates with the outside and is used for spraying the water filtered by the screen 24 out of the housing 10. Specifically, the control device, which is installed in the first sealed bin 333, can achieve better sealing of the control device and prevent the control component 80 from contacting water.

The control device comprises a motor 33, the output shaft 331 of which penetrates through the first sealed bin 333 and extends to the water outlet 11, and is connected with the first sealed bin 333 in a dynamic sealing manner; The output shaft 331 is provide with an impeller for drive that water flow in the housing 10 to be ejected; The control component 80, which is electrically connected with the motor 33 and the detection device respectively, is used for driving the second impeller 332 on the output shaft 331 to rotate and drive the housing 10 to move, receiving the water separation detection signal sent by the detection device and giving an alarm.

In this embodiment, the position sensor 421 includes any one of a Hall sensor, a photoelectric switch and a microswitch.

This embodiment also provides a water-leaving detection method for a swimming pool robot, which detects the position of the swimming pool robot when cleaning the wall of the swimming pool to judge whether the swimming pool robot is out of water, and then judges whether the swimming pool robot is out of water through the position detection, so as to ensure that the swimming pool robot will not cross the water line and always clean the wall or bottom of the swimming pool, thereby improving the cleaning efficiency and effect of the swimming pool robot.

Among them, the position detection is to detect the position of the first buoyancy block 411 on the sliding bar 411 when the swimming pool robot cleans the pool wall, so as to detect whether the housing 10 is out of water.

When performing position detection, the control device controls the swimming pool robot to move vertically upward along the pool wall, and the specific process includes the following steps:

S1, when the swimming pool robot moves in the underwater position and the water surface is higher than the top of the sliding bar 411, the first buoyancy block 411 is continuously positioned at the top of the sliding bar 411 under the buoyancy;

S2, when the swimming pool robot continues to move upwards and the water surface is between the top and the bottom of the sliding bar 411, the first buoyancy block 411 vertically slides downwards along the sliding bar 411 under the buoyancy effect of water and its own gravity;

S3: When the swimming pool robot continues to move upwards and the water surface does not exceed the bottom of the sliding bar 411, the first buoyancy block 411 continues to be at the bottom of the sliding bar 411 under its own gravity, and the position sensor 421 detects the position of the first buoyancy block 411 to identify the swimming pool robot leaving the water, and sends out an alarm prompt.

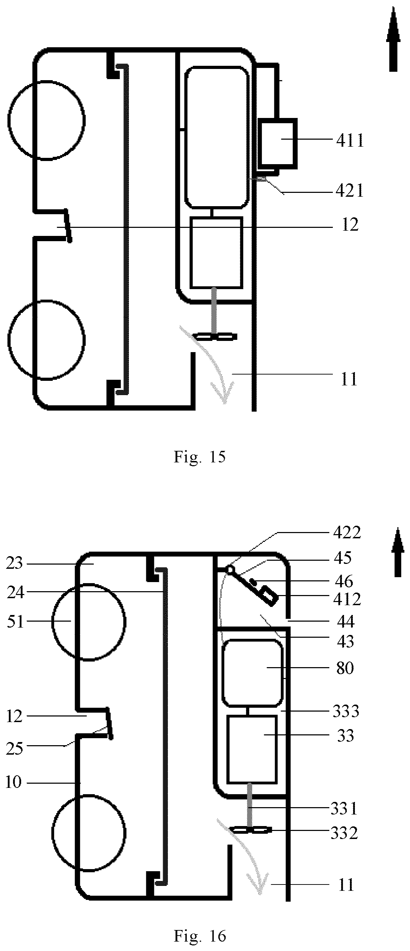

Among them, fig. 14 is a schematic diagram when the robot moves vertically upward and is in an underwater position when cleaning the pool wall; Fig. 15 is a schematic diagram when the robot moves vertically upward and exceeds the waterline when cleaning the pool wall.

Example 2

This embodiment provides another swimming pool robot capable of detecting water leaving, which comprises a housing 10, a walking wheel set 51, a filter chamber 23, a detection chamber 43, a detection device, a control device, a first sealed chamber 333 and a water outlet 11. By arranging the detection device on the swimming pool robot, the swimming pool robot can clean the water level line when cleaning the pool wall or the pool bottom, and at the same time, detect whether the body is out of water at an angle, so as to prevent itself from exceeding the water surface and inhaling a large amount of air, thus affecting the swimming pool robot.

Specifically, the traveling wheel set 51, which includes two sets of wheels, is installed at the bottom of the housing 10 for driving the housing 10 to move.

Specifically, the filter chamber 23 is opened inside the housing 10 and located at the bottom of the housing 10; The filter chamber 23 includes:

The water inlet 12 is opened at the bottom of the filter chamber 23 and located between the traveling wheel sets 51; The water inlet 12 communicates the filter chamber 23 with the outside and is separated by the first chamber cover 25. The filter screen 24 is arranged at that top of the filter chamber 23 and used for filtering the garbage in the swim pool water and collecting the garbage into the filter chamber 23.

Specifically, the detection bin 43 is opened inside the housing 10 and located at the top of the housing 10; The detection bin 43 is provided with a detection port 44 to communicate with the outside; The detection bin 43 is horizontally arranged with the first sealed bin 333 and the water outlet 11, and is arranged at one end far away from the water outlet 11; Specifically, the detection device is installed on the housing 10 for detecting whether the housing 10 is out of water.

In this embodiment, the detection device includes a swing bar detection device, which is installed in the detection bin 43; The swing bar detection device comprises a swing bar 45, one end of which is connected with the inner wall of the detection bin 43, and the other end of which rotates around the connection point connected with the inner wall of the detection bin 43; The second buoyancy block 412 is arranged at one end of the swing rod 45 far from the connection point; The limit block 46 is fixedly installed on the inner wall of the detection bin 43 and located on the rotation stroke of the swing rod 45 for limiting the rotation angle of the swing rod 45; An angle sensor 422, which is arranged at the connection point, is used for detecting the rotation angle of the swing lever 45. By arranging the swing bar detection device, the second buoyancy block 412 is arranged on the swing bar 45, so as to reduce the influence of friction during the rotation of the swing bar 45, and further effectively avoid the situation of jamming and failure during the rotation; At the same time, the angle sensor 422 is used to detect the rotation angle of the swing lever 45 in the process of cleaning the pool wall or the pool bottom, and the swimming pool robot is detected to avoid exceeding the water level.

Specifically, the first sealed bin 333 is opened in the housing 10 and located above the filter chamber bin 23. Specifically, the water outlet 11 is opened in the housing 10 and horizontally arranged with the first sealed bin 333; The water outlet 11 communicates with the outside and is used for spraying the water filtered by the screen 24 out of the housing 10. Specifically, the control device, which is installed in the first sealed bin 333, can achieve better sealing of the control device and prevent the control component 80 from contacting water.

The control device comprises a motor 33, the output shaft 331 of which penetrates through the first sealed bin 333 and extends to the water outlet 11, and is connected with the first sealed bin 333 in a dynamic sealing manner; The output shaft 331 is provide with an impeller for drive that water flow in the housing 10 to be ejected; The control component 80, which is electrically connected with the motor 33 and the detection device respectively, is used for driving the second impeller 332 on the output shaft 331 to rotate and drive the housing 10 to move, receiving the water separation detection signal sent by the detection device and giving an alarm. In this embodiment, the angle sensor 422 includes any one of a Hall sensor, a photoelectric switch and a microswitch.

This embodiment also provides a water-leaving detection method for a swimming pool robot, which can detect the angle of the swimming pool robot when cleaning the wall or bottom of the swimming pool to determine whether the swimming pool robot is out of the water, so as to ensure that the swimming pool robot will not cross the water line through the angle detection and always clean the wall or bottom of the swimming pool, thereby improving the cleaning efficiency and effect of the swimming pool robot.

Among them, the angle detection is to detect the rotation angle of the swing lever 45 when the swimming pool robot cleans the pool wall or the bottom of the pool, so as to detect whether the housing 10 is out of water.

When the angle is detected, the control device controls the swimming pool robot to move vertically upward along the pool wall or horizontally along the pool bottom. The specific process includes the following steps:

T1: When the swimming pool robot moves in the underwater position and the water level is higher than the limit block 46, the second buoyancy block 412 on the swing bar 45 will keep the swing bar 45 against the limit block 46 under the buoyancy;

T2: When the swimming pool robot continues to move upward along the pool wall or horizontally along the pool bottom, and the water surface is between the limit block 46 and the bottom of the swing bar 45, the second buoyancy block 412 on the swing bar 45 rotates away from the limit block 46 around the connection point of the swing bar 45 under the buoyancy of water and its own gravity;

T3: When the swimming pool robot continues to move upward along the pool wall or horizontally along the pool bottom, and the water surface does not exceed the bottom of the swing bar 45, the second buoyancy block 412 on the swing bar 45 keeps the swing bar 45 in a vertical downward or horizontal state under its own gravity, and the angle sensor 422 detects the rotation angle of the swing bar 45 to identify the swimming pool robot leaving the water, and gives an alarm prompt.

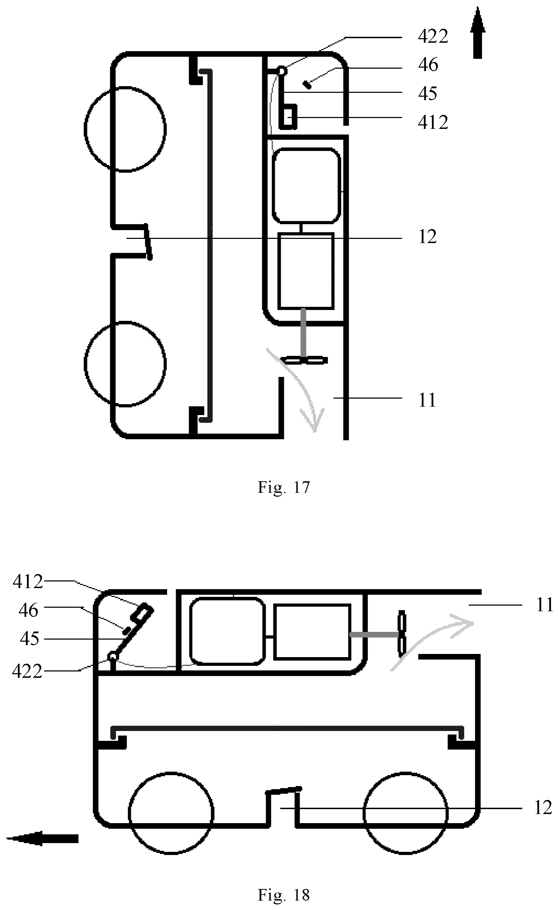

Among them, fig. 16 is a schematic diagram when the robot moves vertically upward and is in an underwater position when cleaning the pool wall; Fig. 17 is a schematic diagram when the robot moves vertically upward and exceeds the waterline when cleaning the pool wall;

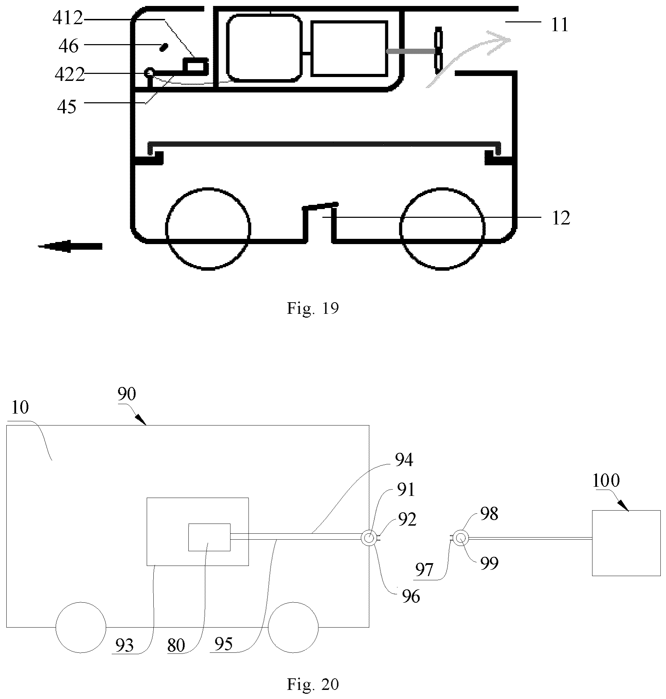

Fig. 18 is a schematic diagram when the robot moves horizontally and is in an underwater position when cleaning the bottom of the pool; Fig. 19 is a schematic diagram when the robot moves horizontally and exceeds the waterline when cleaning the bottom of the pool.

as shown in Fig. 20. A swimming pool robot includes a main body 90 and a controllable magnetic piece 91 arranged on the main body 90. The main body 90 is provided with a charging interface 92, and the controllable magnetic piece 91 is arranged close to the charging interface 92. The controllable magnetic piece 91 is configured to be able to switch between a magnetic state and a nonmagnetic state.

It can be seen from the above description that the swimming pool robot has a novel structure and can be connected with the external interface 97 of the external charger 100 quickly. Compared with the scheme of setting a permanent magnet on the swimming pool robot, the controllable magnetic piece 91 will not absorb ferromagnetic impurities such as iron filings when the swimming pool robot works, so that the user does not need to clean the swimming pool robot frequently, which is beneficial to enhancing the user experience, and the charging interface 92 will not have the problem of poor contact with the external interface 97 due to the adsorption of ferromagnetic impurities, thus ensuring that the swimming pool robot can work.

The charging system includes an external charger 100 and a swimming pool robot.

In some embodiments, the swimming pool robot comprises a main body 90 and a controllable magnetic piece 91 arranged on the main body 90, wherein the main body 90 is provided with a charging interface 92, the controllable magnetic piece 91 is arranged close to the charging interface 92, and the controllable magnetic piece 91 is configured to be capable of switching between a magnetic state and a non-magnetic state, and the controllable magnetic piece 91 is at least one of an electric permanent magnet, a common electromagnet, a holding electromagnet and a power-off electromagnet; The main body 90 is provided with a control component 80 electrically connected with the controllable magnetic piece 91, and the control component 80 is used for controlling the controllable magnetic piece 91 to switch between a magnetic state and a non-magnetic state. The external charger 100 has a magnetic attraction structural member 98, and a permanent magnet 99 for magnetically engaging with the controllable magnetic member 91 and an external interface 97 for engaging with the charging interface 92 are provided on the magnetic attraction structural member 98.

This embodiment takes the swimming pool robot as an example to explain (that is, the swimming pool robot in this embodiment is a swimming pool robot). The main body 90 comprises a housing 10, a water pump, a storage battery and a filter, wherein the housing 10 is provided with a water inlet and a water outlet; a water flow channel communicating the water inlet and the water outlet is arranged in the housing 10; the water pump and the filter are both arranged in the water flow channel; a controllable magnetic piece 91 is arranged on the housing 10; the storage battery is installed on the housing 10; and the storage battery is directly or indirectly electrically connected with the charging interface 92.

Specifically, a second sealed bin 93 is arranged in the housing 10, and the storage battery and the control component 80 are respectively arranged in the second sealed bin 93. The storage battery is indirectly electrically connected with the charging interface 92 through the control component 80, and the control component 80 includes a main control board, which is electrically connected with the charging interface 92 through a first connection line 94 and the controllable magnetic piece 91 through a second connection line 95.

Optionally, the housing 10 is provided with a charging structural member 96, the charging interface 92 and the controllable magnetic member 91 are both provided on the charging structural member 96, and the charging structural member 96 is hermetically connected with the housing 10.

When the control component 80 detects that the charging interface 92 is connected to the external interface 97, it controls the controllable magnetic element 91 to switch to a magnetic state. When the control component 80 detects that the charging interface 92 is disconnected from the external interface 97, it controls the controllable magnetic element 91 to switch to a nonmagnetic state. Alternatively, the controllable magnetic member 91 does not show magnetism when it is powered on, but shows magnetism when it is powered off. In detail, when the swimming pool robot is turned on and enters the charging current detection state, if the charging current is not detected, the main control board energizes the controllable magnetic piece 91 at this time, and the controllable magnetic piece 91 is nonmagnetic (the selected controllable magnetic piece 91 is an electric permanent magnet at this time), so the swimming pool robot can normally enter the water and keep energizing the controllable magnetic piece 91 during the work. At this time, because the controllable magnetic piece 91 is nonmagnetic, Therefore, the controllable magnetic element 91 will not absorb ferromagnetic impurities. When the swimming pool robot is taken ashore, it will automatically shut down by detection (in normal mode, the swimming pool robot will not be charged when it is turned on, and an alarm will be given). At this time, after the swimming pool robot is turned off, the main control board will not energize the controllable magnetic element 91, and the controllable magnetic element 91 will immediately display magnetism, so that the charging interface 92 can normally charge with the external interface 97 of the external charger 100. Because the controllable magnetic element 91 does not absorb iron such as scrap iron in water.

Of course, the controllable magnetic element 91 shows magnetism when it is powered on and does not show magnetism when it is powered off. This arrangement is also possible. Specifically, when the swimming pool robot is turned on and enters the charging current detection state, if the charging current is not detected, the main control board does not energize the controllable magnetic piece 91 at this time, and the controllable magnetic piece 91 is nonmagnetic (the selected controllable magnetic piece 91 is an ordinary electromagnet, etc.), so the swimming pool robot can normally enter the water and work without energizing the controllable magnetic piece 91 all the time. At this time, because the controllable magnetic piece 91 is nonmagnetic, Therefore, the controllable magnetic element 91 will not absorb ferromagnetic impurities. When the swimming pool robot is taken ashore, it will be automatically shut down through detection. At this time, after the swimming pool robot is shut down, the main control board will continue to power on the controllable magnetic element 91 for a preset period of time, and the controllable magnetic element 91 will display magnetism, so that the charging interface 92 can be normally charged in contraposition with the external interface 97 of the external charger 100. Since the controllable magnetic element 91 does not absorb ferromagnetic impurities such as iron chips in water, the swimming pool robot can be charged stably by using the charging interface 92. It should be noted that in the process of charging the swimming pool robot, it is not necessary to use the above two control methods, and other control methods are also possible, for example, the swimming pool robot does not automatically turn off after landing, and the swimming pool robot can charge when it is turned on.

In some embodiments, the charging interface 92 can be a wireless interface, which enables the swimming pool robot to perform contactless charging, which is beneficial to improve the sealing performance and charging safety of the swimming pool robot. Specifically, the wireless interface is a wireless charging receiving component. However, in order to enable the swimming pool robot to charge stably and efficiently, in this embodiment, the charging interface 92 is a terminal interface, which can be an elastic conductive piece with a contact area, such as a spring sheet, an elastic probe, etc. It can also be a hard conductor with a contact area, such as a metal sheet.

To sum up, the swimming pool robot and the charging system provided by the invention are novel in structure, and the swimming pool robot will not absorb any iron filings and other ferromagnetic impurities when working on the water bottom/surface, and can accurately align with the external interface of an external charger when charging, so that users can quickly charge the swimming pool robot. In the later period, users do not need to clean the swimming pool robot frequently, which is beneficial to enhance the user experience.

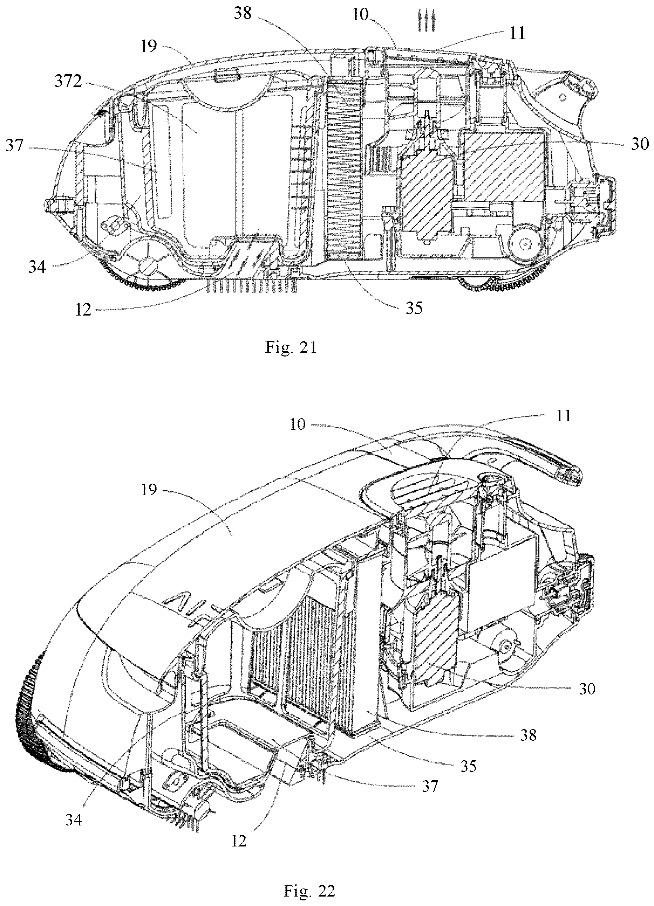

In some embodiments, as shown in Figs. 21 to 24, including a housing 10, which has a water inlet 12 and a water outlet 11. A water flow channel is formed between the water inlet 12 and the water outlet 11 in the housing 10, and a water pump 30 is arranged in the water flow channel, which is respectively provided with a first installation slot 34 and a second installation slot 35 for installing an external filtering device, and the number of the second installation slots 35 is at least one; The first installation groove 34 is located upstream of the water flow channel, and the second installation groove 35 is located downstream of the water flow channel.

as shown in Fig. 21 to fig. 24. A swimming pool robot includes a housing 10 with a water inlet 12 and a water outlet 11. A water flow channel is formed between the water inlet 12 and the water outlet 11 in the housing 10, and a drainage part 39 is arranged in the water flow channel. A first installation slot 34 and a second installation slot 35 for installing an external filter device are respectively arranged in the water flow channel, and the number of the second installation slots 35 is at least one. The first installation groove 34 is located upstream of the water flow channel, and the second installation groove 35 is located downstream of the water flow channel.

As can be seen from the above description, the swimming pool robot of the invention has the beneficial effects that the first installation groove 34 and at least one second installation groove 35 are respectively arranged at the upstream and downstream of the water flow channel for installing external filtering devices, so that filtering devices with different configurations and combinations can be installed according to the actual situation of the swimming pool to be cleaned, thus cleaning the swimming pool in a targeted manner, achieving different cleaning effects, improving cleaning efficiency and ensuring cleaning quality.

as shown in Fig. 21 to fig. 24. The swimming pool robot includes a housing 10 with a water inlet 12 and a water outlet 11. A water flow channel is formed between the water inlet 12 and the water outlet 11 in the housing 10. A drainage part 39 is arranged in the water flow channel, and a first installation slot 34 and a second installation slot 35 for installing an external filter device are respectively arranged in the water flow channel, and the number of the second installation slots 35 is at least one. The first installation groove 34 is located upstream of the water flow channel, and the second installation groove 35 is located downstream of the water flow channel. Specifically, two rollers are respectively arranged on both sides of the housing 10, and a driving motor for driving the rollers is also arranged in the housing 10. The water inlet 12 is located at the bottom wall of the housing 10, and the water outlet 11 is located at the top wall of the housing 10. The drainage part 39 is preferably a motor and an impeller which are connected in a driving manner. In this embodiment, the number of the second mounting grooves 35 is one. In other embodiments, the number of the second mounting grooves 35 can be set to two, three or more.

As shown in figs. 21 and 22, in this embodiment, the drainage part 39 is arranged at the water outlet 11, and the second installation groove 35 is arranged between the drainage part 39 and the first installation groove 34. It is easy to understand that by arranging the second installation groove 35 between the drainage part 39 and the first installation groove 34, the water can be fully filtered before being discharged from the outside of the housing 10 by the drainage part 39. In other embodiments, the second installation groove 35 can be arranged at the water outlet 11, and the drainage part 39 is arranged between the first installation groove 34 and the second installation groove 35. It is easy to understand that before the water flows through the second installation groove 35, it can be stirred by the drainage part 39, so that the dust can be evenly distributed in the second installation groove 35, and the dust can be prevented from being concentrated in the middle of the external filtering device, thereby prolonging the durability of the external filtering device in the second installation groove 35.

In some embodiments, as shown in figs. 21 to 23, the swimming pool robot further includes at least one second bin cover 19, and the second bin cover 19 is movably arranged on the housing 10 to open and close the first installation slot 34 and the second installation slot 35. Specifically, both the first installation slot 34 and the second installation slot 35 communicate with the top wall of the housing 10, and one side of the second bin cover 19 is rotatably connected with the top wall of the housing 10. By rotating the second bin cover 19 to make it close to the top wall of the housing 10, the second bin cover 19 can simultaneously close the top openings of the first installation slot 34 and the second installation slot 35. In other embodiments, the second cover 19 and the housing 10 can be respectively provided with a chute and a clamping strip to realize sliding fit, or the second cover 19 and the housing 10 can be respectively provided with a clamping block and a clamping groove to realize snap-in fastening.

In some embodiments, as shown in figs. 21 to 23, the swimming pool robot further includes a first filtering device 37, and the first filtering device 37 is detachably disposed in the first mounting groove 34. The first filtering device 37 includes a first frame 371 and a filter disc. The filter disc is arranged on the first frame 371, and the filter disc and the first frame 371 enclose a filtering cavity 372. A one-way valve communicating with the filtering cavity 372 is arranged below the first frame 371. When the first filtering device 37 is installed in the first installation groove 34, the one-way valve communicates with the water inlet 12. Specifically, the first frame 371 is basket-shaped, and the peripheral wall of the first frame 371 is provided with a plurality of windows, and the filter disc covers the windows on the peripheral wall of the first frame 371, so that the first filtering device 37 has a larger water passing area and is not easily blocked. Filter disc's filter screen aperture can be set to $180\mu m$, $250\mu m$, $380\mu m$ and other apertures, and users can choose according to the pollution degree in the pool. The first filter device 37 is installed in the first installation groove 34 in a removable mode, which is convenient for replacement and cleaning.

As shown in fig. 21 to fig. 23, the swimming pool robot further includes a second filtering device 38 and at least one quick-release bracket 36. Optionally, the quick-release bracket 36 can be detachably installed in the first installation slot 34 or the second installation slot 35, and the second filtering device 38 can be detachably installed on the quick-release bracket 36. In this embodiment, the quick release brackets 36 are arranged in one-to-one correspondence with the number of the second installation slots 35. The quick-release bracket 36 is installed in the second installation groove 35 in a removable quick-release mode, and the second filter device 38 is quickly assembled and disassembled in the second installation groove 35 through the quick-release bracket 36. It is easy to understand that the first filtering device 37, the second filtering device 38, the drainage part 39 and other units form a fluid cleaning system.

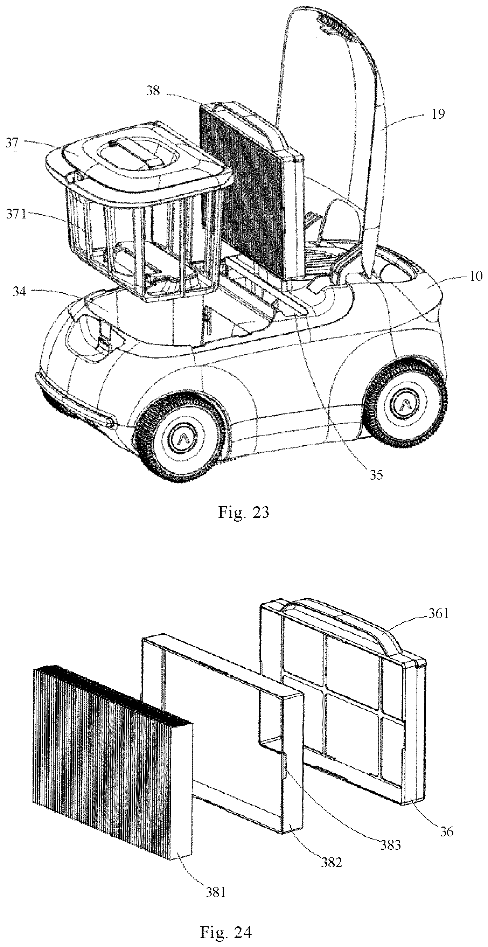

In some embodiments, as shown in fig. 24, the second filtering device 38 includes a filter piece 381 and a filter fixing frame 382, wherein the filter piece 381 is fixedly arranged on the filter fixing frame 382, and the filter fixing frame 382 is detachably arranged on the quick release bracket 36. Specifically, the material of the filter mesh 51 is preferably nylon sea-pa, and the filter mesh 381 is rectangular, and the whole filter mesh 381 is rectangular after being folded for many times. The filter screen fixing frame 382 has a rectangular frame shape, and the filter screen fixing frame 382 is sleeved on the periphery of the filter screen member 381, so that the filter screen member 381 can maintain a certain shape without being deformed, thereby facilitating disassembly and replacement. The quick-release bracket 36 comprises a main body and support bars, wherein the main body is in a rectangular frame shape, and two ends of a plurality of support bars are respectively connected with two opposite side walls of the main body. The filter screen fixing frame 382 is placed in the main body of the quick release bracket 36. As an embodiment, the main body of the quick release bracket 36 is also provided with a handle 361 to facilitate the user to pull.

In some embodiments, as shown in fig. 24, the filter screen frame is provided with a positioning structure or a detachable connection structure, and the filter screen fixed frame 382 is detachably arranged on the quick release bracket 36 through a positioning structure 383 or a detachable connection structure. Specifically, the positioning structure 383 can be set as a positioning protrusion or a positioning groove; The detachable connection structure can be set as a clamping protrusion or a clamping groove, or the detachable connection structure can be set as a chute or a slider to realize sliding fit.

In some embodiments, the mesh of the second filtering device 38 is smaller than that of the first filtering device 37, and the mesh diameter of the filter mesh 381 in the second filtering device 38 is less than or equal to 2. m. Considering that the screen aperture of the second filtering device 38 is small and easy to be blocked, the width of the second filtering device 38 is smaller than the width of the second installation groove 35 when the double filtering devices are designed to work at the same time. When the second filtering device 38 is placed in the second installation groove 35, the second filtering device 38 cannot completely block part of the water flow passage from the first installation groove 34 to the water outlet 11, so that some water filtered by the first filtering device 37 can pass outside the second filtering device 38. The second filter device 38 has different width dimensions, so that the flow rate of water flowing outside the second filter device 38 can be adjusted according to the blockage of the second filter device 38. The water flowing outside the second filtering device 38 accounts for 10-90% of the total flow.

It can be understood that in one embodiment, the first mounting groove and the second mounting groove are arranged substantially in parallel. The second filtering device is not in contact with the first filtering device.

It is easy to understand that the first filtering device 37 and the second filtering device 38 can be used jointly or independently, and there are at least three ways to combine the first filtering device 37 and the second filtering device 38. Mode 1: Load the first filtering device 37 and the second filtering device 38 at the same time. Use the first filtering device 37 to filter the coarse particles in the pool water, and then use the second filtering device 38 to filter the fine particles in the pool water. Mode 2: Only the first filtering device 37 is installed, and the second filtering device 38 is not installed, so that the swimming pool robot only filters coarse particles in the pool water. Mode 3: Only the second filtering device 38 is loaded and the first filtering device 37 is not loaded to filter the fine particles in the pool water. Combined waterproofing should be determined according to the pollution degree in the pool.

The working principle of the first embodiment of this technical scheme is briefly described as follows: after the swimming pool robot is turned on, the drainage part 39 starts to work, so that the water flow channel in the housing 10 generates negative pressure and the one-way valve at the water inlet 12 is opened; The unclean wat in that pool is sucked into the first clean device through the water inlet 12 for the first filtration, so as to filter out relatively large particles in the wat; After passing through the first filtering device 37, the pool water enters the second filtering device 38 to filter out the particulate matter in the water; Finally, it flows out of the housing 10 through the water outlet to achieve the purpose of deep cleaning.

## Claims

1. A swimming pool robot, comprising a housing, a filter and a water pump, wherein the housing is provided with a water inlet and a water outlet, and the water inlet, the filter and the water outlet are interconnected in sequence, and the water pump is interconnected with the filter, charactered in that the swimming pool robot comprises a water-leaving detector at one end of the housing,
the water-leaving detector comprises a buoyancy device and a sensing device, wherein the buoyancy device is configured to be movable between a first position and a second position, and sensing device is configured to transmit a first signal in response to the buoyancy device being in the first position, and to transmit a second signal in response to the buoyancy device being in the second position.

2. The swimming pool robot according to claim 1, charactered in that the buoyancy device is a buoyancy block, the sensing device is a position sensor, and the buoyancy block moves between a first position and a second position according to the buoyancy it receives, and the position sensor is arranged on the movement path of the buoyancy block.

3. The swimming pool robot according to claim 1, charactered in that the buoyancy device is a buoyancy block, the sensing device is an angle sensor, the buoyancy block is rotatably connected with the housing, the buoyancy block swings between a first position and a second position according to the buoyancy it receives, and the angle sensor detects the swing angle of the buoyancy block and sends out a first signal/a second signal.

4. The swimming pool robot according to claim 1, charactered in that the buoyancy device is a buoyancy block, the sensing device is a Hall sensor, and the water-leaving detector further comprises a magnetic element, one of which is connected with the buoyancy block and the other is connected with the housing, and the buoyancy block is rotationally connected with the housing, and swings between a first position and a second position according to different buoyancy.

5. The swimming pool robot according to claim 1, charactered in that the swimming pool robot further comprises:

a driver for driving the swimming pool robot to move;

a control component, which is in signal connection with the water-leaving detector and the driver, and receives the first signal/second signal sent by the sensing device and controls the driver to start and stop.

6. The swimming pool robot according to claim 1, charactered in that the swimming pool robot further comprises:

a driver for driving the swimming pool robot to move;

a cleaner installed on the housing, the driver being in driving connection with the cleaner.

7. The swimming pool robot according to claim 1, charactered in that the swimming pool robot further comprises a drainage part, and a first chamber is arranged inside the housing, and the first chamber is interconnected/closed with the outside through the drainage part.

8. The swimming pool robot according to claim 1, charactered in that the water inlet, the filter and the water outlet are sequentially interconnected to form a filtering flow channel;

the interior of the housing is provided with a first chamber and a second chamber which are separated, and the filtering flow channel is only arranged in one of the first chamber and the second chamber.

9. The swimming pool robot according to claim 8, charactered in that the first chamber and the second chamber are separated by the filter component; or the first chamber and the second chamber are separated by a partition plate fixed on the inner side wall of the housing.

10. The swimming pool robot according to claim 9, charactered in that the filter component comprises a garbage filter box and an accommodating structure for accommodating the garbage filter box, and the first chamber and the second chamber are separated by the accommodating structure.

11. The swimming pool robot according to claim 1, charactered in that the water pump comprises a guide part and a power water pump, and the water outlet, the guide part and the power water pump are connected in sequence.

12. The swimming pool robot according to claim 11, charactered in that the guiding part comprises a guiding chamber and guiding blades arranged in the guiding chamber, and one end of the guiding chamber is connected with the water outlet and the other end is connected with the power pump.

13. The swimming pool robot according to claim 1, charactered in that the swimming pool robot further comprises at least two wheels, and the wheels define a plane, which is the first plane;
a flow channel is formed at the bottom of the housing from the water inlet to the end of the first plane, and the flow channel is provided with an arc-shaped drainage surface.

14. The swimming pool robot according to claim 13, charactered in that the drainage surface extends forward along the traveling direction of the swimming pool robot to form a water-facing end, and the drainage surface extends backward along the traveling direction of the swimming pool robot to form a water-collecting end, and both ends of the drainage surface are respectively connected with the water-facing end and the water-collecting end in an arc transition way.

15. The swimming pool robot according to claim 14, charactered in that any tangent line on the arc surface from the drainage surface to the water collecting end is not parallel to the first plane.

16. The swimming pool robot according to claim 1, charactered in that the swimming pool robot further comprises a water flow velocity detection device and a control component, wherein the control component is connected with the water flow velocity detection device; a water flow channel communicating with the water inlet and the water outlet is arranged in the housing; the filter component is arranged in the water flow channel; and the water flow velocity detection device is at least partially arranged in the water flow channel.

17. The swimming pool robot according to claim 1, charactered in that the swimming pool robot comprises a magnetic charging device, which comprises a main body and a controllable magnetic piece arranged on the main body, wherein the main body is provided with a charging interface, and the controllable magnetic piece is arranged close to the charging interface, and the controllable magnetic piece is configured to be capable of switching between a magnetic state and a non-magnetic state.

18. The swimming pool robot according to claim 1, charactered in that the swimming pool robot comprises a double filtering device, which comprises the housing, the housing is provided with the water inlet and the water outlet, a water flow channel is formed between the water inlet and the water outlet in the housing, the water pump is arranged in the water flow channel, and a first installation slot and a second installation slot for installing an external filtering device are

37 **EP 4 660 396 A1** 38

respectively arranged in the water flow channel, and the second installation slot The first installation groove is arranged upstream of the water flow channel, and the second installation groove is arranged downstream of the water flow channel.

19. The swimming pool robot according to claim 18, characterized in that the first installation groove and the second installation groove are arranged approximately in parallel.

20. The swimming pool robot according to claim 18, characterized in that the first installation groove and the second installation groove are used for installing a first filtering device and a second filtering device respectively, and the second filtering device is not in contact with the first filtering device.

21

Fig. 1

Fig. 2

EP 4 660 396 A1

Fig. 3

Fig. 4

Fig. 5

Fig. 6

Fig. 7

Fig. 8

B

312

22

11

311

32

Fig. 9

20

21

32

10

80

X

183 184 182 12 18

Fig. 10

Fig. 11

Fig. 12

411(41)

421(42)

332

80

11

33

331

333

10

24

23

25

12

51

Fig. 13

411

421

12

11

Fig. 14

EP 4 660 396 A1

Fig. 15

Fig. 16

29

Fig. 19

Fig. 20

Fig. 21

Fig. 22

Fig. 23

Fig. 24

## INTERNATIONAL SEARCH REPORT

| International application No. |
|---|
| **PCT/CN2024/070985** |

**A.    CLASSIFICATION OF SUBJECT MATTER**

E04H 4/16(2006.01)i;  E04H 4/12(2006.01)i;  G01B 21/00(2006.01)i;  G01P 5/01(2006.01)i;  H01R13/631(2006.01)i

According to International Patent Classification (IPC) or to both national classification and IPC

**B.    FIELDS SEARCHED**

Minimum documentation searched (classification system followed by classification symbols)

IPC:  E04H G01B G01P H01R

Documentation searched other than minimum documentation to the extent that such documents are included in the fields searched

Electronic data base consulted during the international search (name of data base and, where practicable, search terms used)

CNTXT: CNKI; WPABS; DWPI; USTXT; EPTXT; WOTXT; ISI_Web of Science: 万方, WANFANG; 超星读秀, DUXIU: 泳池, 水池, 清洁, 清洗, 机器人, 过滤, 浮力, 浮子, 浮块, 离水, 检测, 监测, 感应, 传感, 叶片, 磁吸, 磁性, 开关, 摆动, 滑动, swim+, pool?, clean+, robot?, detect+, filtration, filter+, sensor+, slid+, swing, switch, magnet+, float+

**C.    DOCUMENTS CONSIDERED TO BE RELEVANT**

| Category* | Citation of document, with indication, where appropriate, of the relevant passages | Relevant to claim No. |
|---|---|---|
| PX | CN 116025202 A (SHENZHEN YUANDING INTELLIGENT INNOVATION CO., LTD.) 28 April 2023 (2023-04-28)<br>  description, paragraphs [0062]-[0116], and figures 1-7 | 1-5 |
| Y | CN 114278129 A (SHENZHEN CHASING-INNOVATION TECHNOLOGY CO., LTD.) 05 April 2022 (2022-04-05)<br>  description, paragraphs [0017]-[0047], and figures 1-10 | 1-20 |
| Y | US 6412133 B1 (AQUA PRODUCTS INC.) 02 July 2002 (2002-07-02)<br>  description, column 22, line 58-column 23, line 38 | 1-20 |
| Y | CN 114753680 A (HUBEI YIMU ELECTRONIC TECHNOLOGY CO., LTD.) 15 July 2022 (2022-07-15)<br>  description, paragraphs [0035]-[0056], and figures 1 and 7 | 17 |
| A | CN 110670918 A (ZHEJIANG CIPU SWIMMING POOL CO., LTD.) 10 January 2020 (2020-01-10)<br>  description, paragraphs [0031]-[0068], and figures 1-6 | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/070985**

**C.    DOCUMENTS CONSIDERED TO BE RELEVANT**

| Category* | Citation of document, with indication, where appropriate, of the relevant passages | Relevant to claim No. |
|---|---|---|
| A | US 2022042335 A1 (ZODIAC POOL CARE EUROPE) 10 February 2022 (2022-02-10) description, paragraphs [0031]-[0034], and figures 1-4 | 1-20 |
| A | US 2019257807 A1 (WITELSON SHAY et al.) 22 August 2019 (2019-08-22) description, paragraphs [0026]-[0092], and figures 1-10 | 1-20 |
| A | CN 112292314 A (WATERTECH CORP.) 29 January 2021 (2021-01-29) description, paragraphs [0049]-[0051], and figures 1-3 | 1-20 |

Form PCT/ISA/210 (second sheet) (July 2022)

**INTERNATIONAL SEARCH REPORT**
Information on patent family members

International application No.

**PCT/CN2024/070985**

| Patent document cited in search report | | | Publication date (day/month/year) | Patent family member(s) | | | Publication date (day/month/year) |
|---|---|---|---|---|---|---|---|
| CN | 116025202 | A | 28 April 2023 | None | | | |
| CN | 114278129 | A | 05 April 2022 | CN | 114278129 | B | 21 June 2022 |
| US | 6412133 | B1 | 02 July 2002 | US | 2006048312 | A1 | 09 March 2006 |
| | | | | US | 7316751 | B2 | 08 January 2008 |
| CN | 114753680 | A | 15 July 2022 | CN | 217420688 | U | 13 September 2022 |
| | | | | CA | 3162728 | A1 | 23 November 2023 |
| | | | | US | 2023374807 | A1 | 23 November 2023 |
| | | | | EP | 4283076 | A1 | 29 November 2023 |
| | | | | AU | 2022231750 | A1 | 07 December 2023 |
| CN | 110670918 | A | 10 January 2020 | CN | 210976755 | U | 10 July 2020 |
| | | | | CN | 110670918 | B | 24 August 2021 |
| US | 2022042335 | A1 | 10 February 2022 | AU | 2021322811 | A1 | 22 December 2022 |
| | | | | EP | 4146884 | A1 | 15 March 2023 |
| | | | | WO | 2022029713 | A1 | 10 February 2022 |
| US | 2019257807 | A1 | 22 August 2019 | EP | 3530843 | A1 | 28 August 2019 |
| | | | | US | 11493495 | B2 | 08 November 2022 |
| | | | | AU | 2019201180 | A1 | 05 September 2019 |
| CN | 112292314 | A | 29 January 2021 | CA | 3101281 | A1 | 31 October 2019 |
| | | | | IL | 278174 | A | 30 November 2020 |
| | | | | AU | 2019261395 | A1 | 12 November 2020 |
| | | | | US | 10294686 | B1 | 21 May 2019 |
| | | | | WO | 2019209932 | A1 | 31 October 2019 |
| | | | | EP | 3810503 | A1 | 28 April 2021 |
| | | | | CN | 112292314 | B | 09 December 2022 |

Form PCT/ISA/210 (patent family annex) (July 2022)